# EUROPÄISCHE PATENTSCHRIFT

(11) **EP 0 731 760 B1**
(45) Veröffentlichungstag und Bekanntmachung des Hinweises auf die Patenterteilung: **11.06.1997**
(21) Anmeldenummer: 95900551.3
(22) Anmeldetag: 28.11.1994
(51) Int. Cl.: B60N 2/00, B60N 2/24

(54) **SITZ, INSBESONDERE SITZPOLSTER, SOWIE EIN VERFAHREN ZUR HERSTELLUNG DIESES SITZPOLSTERS**
SEAT, IN PARTICULAR SEAT UPHOLSTERY, AND PROCESS FOR PRODUCING SEAT UPHOLSTERY
SIEGE, NOTAMMENT CAPITONNAGE POUR SIEGE, ET PROCEDE DE FABRICATION DE CAPITONNAGE POUR SIEGE

(30) Priorität: 29.11.1993 AT 2415/93
(43) Veröffentlichungstag der Anmeldung: 18.09.1996
(73) Patentinhaber: C.A. GREINER & SÖHNE GESELLSCHAFT M.B.H., A-4550 Kremsmünster (AT)
(72) Erfinder: EDER, Bernhard, A-4020 Linz (AT)
(74) Vertreter: Secklehner, Günter, Dr.
(86) Internationale Anmeldenummer: AT9400178
(87) Internationale Veröffentlichungsnummer: WO9514587

(56) Entgegenhaltungen:
- EP-A- 0 190 064
- EP-A- 0 438 186
- EP-A- 0 512 382
- WO-A-87/06894
- DE-A- 3 702 639
- DE-A- 4 140 935

## Beschreibung

Die Erfindung betrifft einen Sitz, insbesondere Sitzpolster, wie er im Oberbegriff des Patentanspruches 1 beschrieben ist, sowie ein Verfahren zur Herstellung dieses Sitzpolsters (siehe zum Beispiel EP-A-0 512 382).

Es sind bereits verschiedene Sitzpolster, z.B. gemäß EP-A1 0 190 064, insbesondere für öffentliche Verkehrsmittel bekannt geworden, bei welchen ein Sitz neben dem Sitzpolster ein diesen aufnehmendes Traggestell, insbesondere aus Metall, aufweist, welches am Fußboden des Verkehrsmittels, insbesondere eines Eisenbahnwaggons, festgeschraubt ist. Bedingt durch die immer größer werdenden Schäden durch Vandalen wurde bereits vorgesehen, daß Sitzpolster, die ein Stützelement aus Kunststoffschaum, welches mit einem Bezugstoff umhüllt ist, aufweisen, mit einer zwischen diesen angeordneten Schutzschichte, insbesondere einem Metallgewebe, verstärkt werden, um zu verhindern, daß die Vandalen mit spitzen Gegenständen bzw. Messern den gesamten Sitzpolster einfach zerstören können. Diese meist aus einem Metallnetz bzw. Gewirke oder einer Metallmatte bestehende Schutzschichte zwischen dem Bezugstoff und dem Stützelement wurde entweder lose eingelegt oder über eine Kleberschichte mit dem Bezugstoff und dem Stützelement verbunden.

Weiter ist es auch bereits bekannt - gemäß WO-A1 87/06894-, einen Sitzpolster für einen Sitz in einem öffentlichen Verkehrsmittel aus mehreren Schichten herzustellen, der beispielsweise durch ein mit einem Flammschutzmittel versehenes Stützelement aus Kunststoffschaum und einen dieses umhüllenden, schwer entflammbaren Bezugstoff bestehen. Zwischen dem Bezugstoff und dem Stützelement kann eine durch eine feuchtigkeitsdichte Sperrfolie gebildete Zwischenschichte angeordnet sein, sodaß das aus einem mit einem pulverförmigen Flammschutzmittel versetzten Kunststoffschaum bestehende Stützelement auf diese Zwischenschichte aufgeschäumt werden kann. Wird dabei die Zwischenschichte als feuchtigkeitsdichte Sperrfolie ausgebildet, so kann selbst beim Einbringen des Kunststoffschaums in flüssiger Form ein Eindringen desselben in das Gewebe des Bezugstoffes verhindert und damit ein günstiges Sitzklima aufrecht erhalten werden. Wird bei einem derartigen Sitzpolster der Bezugstoff durchgeschnitten bzw. aufgerissen oder aufgeritzt, so dehnt sich der Kunststoffschaum, der durch den Bezugstoff vorgespannt ist, geringfügig aus und die Schnittenden des Bezugstoffes klaffen auseinander, sodaß das darunterliegende, weiche Kunststoffmaterial des Stützelementes bis an die Sitzoberfläche vorragt. Dadurch wird eine gesamte Zerstörung des Sitzes beschleunigt bzw. beginnt sich nach kurzer Zeit auch beim normalen Fahrgastbetrieb der Bezugstoff im Randbereich der Schnittstelle von dem Stützelement zu lösen, und der Sitzpolster ist nach kurzer Zeit völlig zerstört und muß ausgetauscht werden.

Der vorliegenden Erfindung liegt die Aufgabe zugrunde, einen Sitzpolster für einen Sitz eines öffentlichen Verkehrsmittels zu schaffen, der einer Zerstörung durch Vandalen einen hohen Widerstand entgegensetzt und eine bedingte Weiterverwendung nach einer Zerstörung, insbesondere nach einem Durchtrennen des Bezugsstoffes ermöglicht sowie einfach herstellbar ist.

Diese Aufgabe der Erfindung wird durch die im Kennzeichenteil des Patentanspruches 1 angegebenen Merkmale gelöst. Der überraschende, nicht vorhersehbare Vorteil dieser Lösung liegt darin, daß durch die Zuordnung dieser Schichten und die für die Verbindung derselben notwendigen Beschichtungen, ohne daß der Sitzkomfort darunter leidet, der Tragkörper direkt an der Zwischenschichte angeformt oder die Schutzschichte direkt in den Tragkörper eingeschäumt werden kann. Vor allem wird erreicht, daß auch bei dieser Herstellungsart eine ausreichende Durchlüftung sichergestellt ist, da durch die zwischen der feuerbeständigen bzw. -hemmenden Einlageschichte und den durch das Einbringen von flüssigem Kunststoffmaterial hergestellten Tragkörper zwischengeschaltete, flüssigkeitsdichte Sperrfolie die Elastizität der Zwischenschichte und der darüberliegenden Schichten sowie der Kurzzeitsitzkomfort nicht verschlechtert wird. Gleichzeitig wird durch diese knapp unterhalb der Einlageschichte angeordnete, schnittefeste Schutzschichte ein Aufplatzen im Bereich von zerschnittenen Bereichen des Bezugsstoffes verhindert, da die
Dicke der feuerfesten Schuztschichte gering ist. Trotzdem ist es möglich, den Tragkörper aus Kunststoffschaum durch einen Anformvorgang direkt an dem Verbundbauteil zu befestigen, wodurch eine einfache Herstellung mit wenigen Arbeitsgängen erzielt werden kann. Weiters ist es durch die Ausführungsvariante, bei der das Verkleidungselement bzw. der Verbundbauteil direkt auf den Tragkörper über eine Kleberschichte befestigt ist, möglich, den gesamten Tragkörper zur Abfuhr von Wärme und Feuchtigkeit zu verwenden. Durch die Anordnung der Trennebene zum Austauschen des Verbundelementes im Bereich der schnittfesten Schutzschichte wird jener Bereich, der dem Verkleidungselement zugeordnet ist, der an sich nicht so hoch reißfesten Tragkörper soweit verstärkt, daß die Trennebene dort angeordnet werden kann, und der Tragkörper mit der schnittfesten Schutzschichte trotzdem in einem Herstellvorgang beim Aufschäumen des Stützelementes verbunden werden kann.

Unabhängig davon kann aber auch die Aufgabe der Erfindung durch die Merkmale des nebengeordneten Patentanspruches 2 eigenständig gelöst werden. Vorteilhaft ist dabei, daß einerseits bei einer Brandbelastung von der Sitzfläche her ein Durchdringen der Flammen in Richtung des Tragkörpers vermieden wird und andererseits bei einer Brand- bzw. Temperaturbelastung des Sitzpolsters von unten ein Durchtreten bzw. Hochtreten des flüssigen bzw. verflüssigten Kunststoffschaumes durch die schnittfeste Schutzschichte verhindert wird. Weiters wird durch diese Sperrschichte auch die dochtartige Wirkung des verschmorten bzw. verbrannten Verkleidungselementes im Bereich der schnittfesten Schutzschichte verhindert, welche sonst zu einer Flammenbildung führen würde.

Weitere vorteilhafte Ausgestaltungen des Sitzpolsters sind in den Patentansprüchen 3 bis 9 beschrieben.

Vorteilhaft ist auch eine Ausführungsvariante nach Patentanspruch 10, da dadurch für den geplanten Verwendungszweck eine ausreichende Haftung zwischen den einzelnen Schichten des Sitzpolsters sichergestellt ist, die andererseits ein rasches manuelles Trennen des Tragkörpers und des Verbundbauteiles ermöglicht. Durch diese vorgeplante Trennstelle ist der Fertigungsablauf für die Herstellung eines derartigen Sitzpolsters nicht erschwert oder gegenüber der Herstellung eines nicht teilbaren Sitzpolsters nicht verteuert, sondern es wird nur durch entsprechende Auslegung einer einzelnen Verbindungsschichte eine mehrfache Verwendung jenes Teils des Sitzpolsters, der erfahrungsgemäß kaum verschmutzt und nur unwesentlich von außen zerstört werden kann, erzielt.

Durch die Weiterbildung nach Patentanspruch 11 wird erreicht, daß ohne zusätzliche Vorkehrungen beim Abtrennen des Verbundbauteiles durch einen Schälvorgang die Positionierung und Halterung der schnittfesten Schutzschichte im Stützelement gesichert ist.

Von Vorteil ist auch eine Ausführung nach Patentanspruch 12. Durch die Verlagerung der Verbindungsvorrichtung zwischen die schnitthemmende Schutzschichte und der dieser benachbarten Schichte, insbesondere Einlageschichte des Verbundbauteiles, kann diese schnittfeste Schutzschichte neben ihrer Sicherheitsfunktion für die darunterliegenden Schichten des Tragkörpers gleichzeitig auch zum Schutz dieser Teile des Tragkörpers beim Abtrennen des Verbundbauteiles vom Tragkörper bzw. zur haltbaren Befestigung des neuen Verbundbauteiles verwendet werden.

Durch die Ausgestaltung nach Patentanspruch 13 wird ein rasches Ablösen des Verbundbauteiles, insbesondere des Bezugsstoffes und der Schaumstoffschichte ohne wesentliche Nacharbeit sichergestellt, da die Schichte in einem Stück ähnlich einer Haut von dem Tragkörper abgezogen werden kann. Der Vorteil dieser Ausbildung, insbesondere der entsprechend reißfesten Ausbildung der Einlageschichte liegt aber auch darin, daß sich diese möglichst vollständig im Bereich der Verbindungsvorrichtung, also im Bereich der Kleberschichte von der benachbarten Schichte des Tragkörpers, insbesondere der schnitthemmenden Schutzschichte löst, sodaß ohne wesentliche Nacharbeit, nur durch Auftragen einer neuen Kleberschichte oder durch das Aufsetzen eines mit einer Selbstklebeschichte beschichteten Verbundbauteiles der neue Verbundbauteil auf dem bereits ein- oder mehrfach vorher verwendeten Tragkörper aufgesetzt und ausreichend fest befestigt werden kann.

Gleichermaßen wird auch durch die Ausbildung nach Patentanspruch 14 die Herstellung eines geteilten Sitzpolsters vereinfacht.

Die Weiterbildung nach Patentanspruch 15 ermöglicht die Herstellung einer dünnen Zwischenschichte und/oder einer Abdeckschichte unter Verwendung von Recyclingmaterialien, wobei durch einfache zusätzliche Arbeitsvorgänge diese auf die unterschiedlichen Anforderungsprofile einfach eingestellt werden können.

Bei Verwendung von Füllstoffen aus Recyclingkunststoffen haben sich die Ausführungsvarianten gemäß Patentanspruch 16 bewährt.

Vorteilhaft ist die Weiterbildung nach Patentanspruch 17, da dadurch eine Barriere gegen das Eindringen der Flammen in das Innere des Sitzpolsters geschaffen wird. Trotzdem weist diese Einlageschichte noch eine ausreichende Flexibilität auf, sodaß der Sitzkomfort nicht leidet und der Bezugsstoff im Kantenbereich keiner zu hohen Abnützung unterliegt.

Durch die höhere Verdichtung des mit den Füllstoffen oder gegebenenfalls Füllmaterialien versetzten Kunststoffschaums kann dieser gemäß Patentanspruch 18 als Druckverteilungsplatte und höherfeste Schichte, insbesondere als Zwischenschichte und/oder Abdeckschichte eingesetzt werden.

Vorteilhaft ist weiters die Ausbildung der Zwischenschichte nach Patentanspruch 19, da dadurch eine Brandhemmung, vor allem im Bereich der Sitzpolster, einfach erzielt werden kann.

Die Zerstörung des Tragkörpers kann vor allem dadurch erschwert werden, wenn die schnitthemmende Schutzschichte gemäß Patentanspruch 20 ausgebildet ist.

Eine zusätzliche Funktion dieser schnittfesten Schutzschichte wird durch die Ausbildung nach Patentanspruch 21 erreicht, da dadurch neben der Schutzwirkung dieser Schutzschichte diese gleichzeitig auch zur Erhöhung des Sitzkomforts und zur Verbesserung des Federungverhaltens eines derartigen Sitzpolsters herangezogen werden kann.

Dazu kann auch eine Weiterbildung nach Patentanspruch 22 von Vorteil sein, um eine bessere Anpassung des Sitzpolsters bzw. dessen äußerer Form an die anatomischen Gegebenheiten zu ermöglichen.

Eine bessere Durchlüftung und ein Verhindern des Zusammensinkens des Sitzpolsters kann durch die Merkmale nach Patentanspruch 23 erreicht werden.

Die Lebensdauer des Tragkörpers kann zusätzlich durch die Weiterbildung nach Patentanspruch 24 verbessert werden.

Ein einfacher Aufbau eines Sitzpolsters unter gleichzeitiger Anordnung einer Verbindungsvorrichtung zum Trennen des Verkleidungselementes vom Tragkörper wird durch die weitere Ausführungsvariante nach Patentanspruch 25 erreicht.

Ein größerer Anteil des Sitzpolsters als Tragkörper kann durch die Ausgestaltung nach Patentanspruch 26 erreicht werden.

Durch die Anordnung einer flüssigkeitsdichten Sperrfolie nach Patentanspruch 27 kann der Tragkörper bzw. dessen Stützelement direkt an einem vorgefertigten Verkleidungsbauteil angeformt werden.

Für die Herstellung eines Tragkörpers unter Verwendung einer verlorenen Folie empfiehlt sich die Ausbildung der Folie nach Patentanspruch 28.

Erleichtert wird der Zusammenbau der einzelnen Schichten und Folien eines Sitzpolsters durch die Ausbildung nach Patentanspruch 29.

Von besonderem Vorteil ist auch eine weitere Ausgestaltung nach Patentanspruch 30, da damit ein Durchtritt von Flüssigkeit beim Einbringen des flüssigen Rohmaterials zur Herstellung des Kunststoffschaums für das Stützelement unterbunden und trotzdem in gewissen Bereichen eine Dampfdurchlässigkeit bzw. eine Feuchtigkeits- und Luftdurchlässigkeit erreicht wird, die den Sitzkomfort verbessert und einen Wärme- und Flüssigkeitsstau im Stützelement verhindert.

Vorteilhaft ist die Verwendung eines Klebers gemäß Patentanspruch 31 als Verbindungsvorrichtung, da dadurch zusätzliche Schichten eingespart werden können und außerdem durch die Wahl eines entsprechenden Klebers die Einhaltung der Haftkräfte und ein manuelles zerstörungsfreies Ablösen der zu trennenden Teile, wie des Verkleidungselementes und des Tragkörpers, erreicht wird.

Vorteilhaft ist auch ein Verfahren, wie es im Oberbegriff der Patentansprüche 32 und 33 beschrieben ist.

Ein Verfahren ist durch die Merkmale im Kennzeichenteil des Patentanspruches 32 gekennzeichnet. Dadurch werden die Sicherheitseigenschaften eines derartigen Sitzpolsters, insbesondere im Nahverkehrsbereich, in dem die größten Vandalismusschäden auftreten, verbessert. Trotz der zerstörungsfesten Ausbildung, bedingt durch den Einbau der schnittfesten Schutzschichte mit der Anordnung eines Feuerblockers, also einer feuerhemmenden Einlageschichte, kann für die Kurzzeitbenutzung ein ausreichender Sitzkomfort erreicht werden, der es andererseits gestattet, daß das Stützelement des Tragkörpers direkt an den vorgefertigten Verbundbauteil bzw. das Verkleidungselement, welches auch in ebenflächiger Bauweise gleich mit Teilen des Tragkörpers verbunden werden kann, aufgebracht werden kann.

Durch die weitere Lösung gemäß den Maßnahmen im Patentanspruch 33, kann in gleicher Art und Weise, jedoch mit geringerem Aufwand ein einen noch höheren Sitzkomfort aufweisender Sitzpolster hergestellt werden, der in Art eines Baukastensystems unterschiedlichen Qualitätsanforderungen angepaßt werden kann, ohne daß das Herstellungsverfahren grundsätzlich verändert werden muß.

Schließlich wird durch die Maßnahmen nach Patentanspruch 34 erreicht, daß mit denselben Fertigungsmethoden, unter Ausnützung von Vakuum Teilen des Tragkörpers in der Form zur Herstellung des Stützelementes gehaltert werden können und dadurch mit den gleichen Herstellungsprinzipien auch die unterschiedlichen Sitzpolster für die verschiedenen Anwendungsfälle` wie sie z.B. im Nah- und Fernverkehr bei den Bundesbahnen auftreten, beherrscht werden können.

Die Erfindung wird im nachfolgenden anhand der in den Zeichnungen dargestellten Ausführungsbeispiele näher erläutert.

Es zeigen:
- Fig. 1: einen erfindungsgemäß ausgebildeten Sitz, wie er in modernen Eisenbahnwaggons zur Anwendung kommt in vereinfachter, schematischer, schaubildlicher Darstellung;
- Fig. 2: einen Teil des erfindungsgemäßen Sitzpolsters in vereinfachter, schematischer, schaubildlicher Darstellung;
- Fig. 3: den Sitzpolster nach Fig. 2 in Seitenansicht, geschnitten und vereinfachter, schematischer Darstellung;
- Fig. 4: den erfindungsgemäßen Sitzpolster nach Fig. 1 in Stirnansicht, geschnitten, gemäß den Linien IV-IV in Fig. 1;
- Fig. 5: einen Teil einer anderen Ausführungsvariante eines erfindungsgemäßen Sitzpolsters in Seitenansicht, geschnitten und vereinfachter, schematischer Darstellung;
- Fig. 6: eine andere Ausführungsform des Sitzpolsters in Seitenansicht, geschnitten und vereinfachter, schematischer Darstellung;
- Fig. 7: den Tragkörper mit der in dessen Oberfläche eingebetteter schnitthemmender Schutzschichte und der auf dieser angeordneten, gasdichten Schutzfolie für die Herstellung des Sitzpolsters nach den Fig. 5 und 6 in Seitenansicht, geschnitten und vereinfachter, schematischer Darstellung;
- Fig. 8: eine Vorrichtung zur Herstellung des Sitzes nach den Fig. 1 bis 4 in vereinfachter, schematischer Darstellung;
- Fig. 9: eine Form zur Herstellung eines Sitzpolsters nach den Fig. 1 bis 4 in Seitenansicht, geschnitten und vereinfachter, schematischer Darstellung;
- Fig. 10: eine weitere Ausbildung des Sitzpolsters in Seitenansicht, geschnitten und vereinfachter schematischer Darstellung;
- Fig. 11: eine andere Weiterbildung des Sitzpolsters in Seitenansicht, geschnitten und vereinfachter schematischer Darstellung.

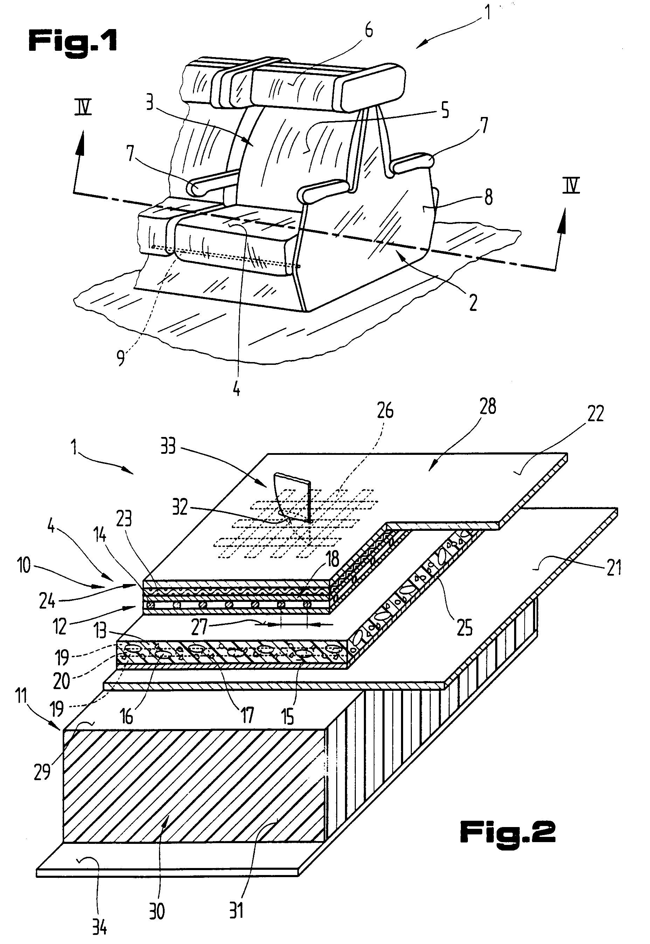

In Fig. 1 ist ein Sitz 1, beispielsweise in einem öffentlichen Verkehrsmittel, wie einer Straßenbahn, einem Eisenbahnwaggon oder einem Autobus dargestellt. Dieser Sitz 1 besteht aus einem Traggestell 2 und einer aus mehreren Polstern bestehenden Polsterung 3, die, wie beim dargestellten Ausführungsbeispiel einen Sitzpolster 4, einen Rückenpolster 5 und einen Kopfpolster 6 umfassen kann. Jeder dieser Sitzpolster, Rückenpolster und Kopfpolster 4,5 bzw. 6 besteht aus mehreren Schichten. Der Sitzpolster, der Rückenpolster und der Kopfpolster 4, 5, 6 sind zwischen Armlehnen 7, auf den aus einer Seitenwand 8 und schematisch strichliert angedeuteten, durch Rohre 9 gebildeten Traggestell 2 gehaltert.

In den Fig. 2 bis 4 ist ein Sitzpolster 4 schematisch vereinfacht gezeigt. So ist in Fig. 2 ein Teil des Sitzpolsters 4 schematisch vereinfacht und zum besseren Verständnis des Schichtaufbaues mit gegeneinander versetzten Schichten dargestellt. Aus dieser Darstellung ist zu ersehen, daß der Sitzpolster 4 aus einem Verkleidungselement 10 und einem Tragkörper 11 besteht. Die Verbindung zwischen dem Verkleidungselement 10 und dem Tragkörper 11 erfolgt über eine lösbare Verbindungsvorrichtung 12 zwischen dem Verkleidungselement 10 und einer Zwischenschichte 13 bzw. einer schnittfesten Schutzschichte 14.

Die Zwischenschichte 13 besteht aus einem aus Primärmaterialien gebildeten Schaumstoff 15, beispielsweise einem Polyurethan-Schaum, wie ein Kalt- oder Heißformschaum, der mit Füllstoffen 16 in Form von Schaumstoffgranulaten aus einem weichen Schaumstoff mit einer Korngröße von 2 mm bis 20 mm, insbesondere Recyclingkunststoffen vermischt ist. Bevorzugt können auch weitere Füllstoffe 17, z.B. Korkgranulate und/oder Gummigranulate und/oder Kalziumkarbonat und/oder Hartpolyurethanabfälle und/oder thermoplastische Kunststoffabfälle mit einer Korngröße von 2 mm bis 20 mm in geringerem Anteil zugemischt sein.

Die Zwischenschichte 13 ist mit der Schutzschichte 14 über eine Kleberschichte 18 verbunden. Diese Zwischenschichte 13 kann ein- oder mehrlagig ausgebildet sein und z.B. auch aus zwei Platten 19 und einer weiteren, zwischen dieser angeordneten Schutzschichte 20, beispielsweise ein Gewebe, Gewirke, Geflecht oder Gitter bzw. Netz aus hochfesten und gegebenenfalls hochtemperaturfesten Fäden oder Fasern aus Metallen, Keramik, Kohle oder Glas bestehen. Auf der von der Schutzschichte 14 abgewandten Seite der Zwischenschichte 13 ist weiters eine flüssigkeitsdichte Sperrfolie 21 befestigt, welche eine Dampfdiffusionswiderstandzahl geringer 100.000, bevorzugt geringer 60.000 aufweist. Diese Zwischenschichte 13 wird beispielsweise mit einem Raumgewicht zwischen 60 und 150 kg hergestellt. Die Füllstoffe 16, 17 mit einem geringen Raumgewicht, beispielsweise zwischen 40 und 100 kg/m³ werden über einen Polyurethanschaum mit höherem Raumgewicht zwischen 600 und 1000 kg/m³ zu einer festen Zwischenschichte 13 vereinigt. Gemäß einer möglichen Ausführungsvariante kann der mit den Füllstoffen 16, 17, insbesondere den Recyclingkunststoffen versetzte, aus Primärmaterial bestehende Schaumstoff 15 durch Einwirkung von Druck und/oder Temperatur thermisch verdichtet werden. Bei dieser thermischen Verdichtung des mit den Füllstoffen 16 und/oder 17 versehenen Kunststoffschaums werden die Zellstege des Schaumstoffs 15 und der Schaumstoffgranulate bzw. anderer Kunststoffe erweicht, und es können die Platten 19 auf eine geringere Dicke verdichtet werden, wobei das Raumgewicht vom freigeschäumten Raumgewicht zwischen 60 kg/m³ und 150 kg/m³, bevorzugt 100 kg/m³, auf 200 kg/m³ bis 400 kg/m³, bevorzugt 300 kg/m³, verdichtet werden kann. Während dieses Verdichtungsvorganges kann, falls eine zusätzliche Schutzschichte 20 vorgesehen ist, diese voll in die Zwischenschichte 13 eingebettet werden, wobei gleichzeitig eine Formgebung der Zwischenschichte 13 erfolgen kann.

Es ist aber beispielsweise auch vorteilhaft, gegebenenfalls in dieser Zwischenschichte 13 eine Sitzmulde auszuformen, wozu die Zwischenschichte 13 in dieser Raumform hergestellt und auch die Schutzschichte 14, 20 entsprechend räumlich vorverformt werden kann. Besteht die Schutzschichte 20 aus Glas, Kohle oder Keramikfasern, so ist eine nahezu 100 %-ige Wiederverwertung bzw. ein Recycling von verbrauchten Zwischenschichten 13 möglich. Ebenso wird auch beim Einstoßen von spitzen Gegenständen und dem nachfolgenden Herausziehen verhindert, daß spitze, eventuell stechende Teile aus dem Innenraum der Zwischenschichte herausgezogen werden, sodaß nachfolgend Verletzungen von Nachbenützern vermieden werden.

Die Herstellung des Verkleidungselementes 10 kann bespielsweise in ebenflächiger Form erfolgen. Es kann aber bei der Herstellung des Sitzpolsters 4 auch mit der schnittfesten Schutzschichte 14, beispielsweise ein Drahtgitter, Drahtgewebe oder ein Drahtgeflecht, bevorzugt aus Metall, insbesondere Federstahl, über einen Kleber bzw. einer Kleberschichte 18, die gleichzeitig die Verbindungsvorrichtung 12 bilden kann, auf einer Seite der Zwischenschichte 13 aufgeklebt werden. Das Verkleidungselement 10 besteht aus einem Bezugstoff 22 und einer Einlageschichte 23, die einen Verbundbauteil 24 bilden, der über die als Verbindungsvorrichtung 12 gebildete Kleberschichte 18 mit dem Tragkörper 11 lösbar verbunden ist. Auf der gegenüberliegenden, beim fertigen Sitzpolster 4, dem Tragkörper 11 zugewandten Oberfläche der Zwischenschichte 13 ist die flüssigkeitsdichte Sperrfolie 21, gegebenenfalls unter Zwischenschaltung einer Kleberschichte 25 oder durch ein Erwärmen über die der Sperrfolie 21 innewohnende Klebereigenschaft an dieser befestigt. Bevorzugt wird diese Sperrfolie 21 durch eine Folie aus Polyurethan gebildet.

Auf die schnittfeste Schutzschichte 14 ist über die gleiche Kleberschichte 18, mit der diese auf der Zwischenschichte 13 befestigt ist, oder eine zusätzliche Zwischenschichte die den Bezugsstoff 22 aufnehmende Einlageschichte 23 befestigt. Diese Einlageschichte 23 kann beispielsweise aus einem Gewebe. Gewirke, Geflecht oder Gitter bzw. Netz aus flammfesten, zumindest brandhemmenden und/oder schwer entflammbaren, gegebenenfalls hochtemperaturfesten Fäden oder Fasern aus Metallen, Keramik, Kohle oder Glas, Natur oder Kunststoffmaterialien, z.B. preoxidiertem Polyacrylnitril, Aramid, Polyaramid und/oder Polyamid und/oder Polyimid oder sonstigen thermisch stabilisierten Fasern bzw. Fäden bestehen. In der Einlageschichte 23 können auch Fasern oder Fäden aus den verschiedenen genannten Materialien beliebig gemischt oder übereinander angeordnet sein. Die Einlageschichte 23 kann, wenn dies als notwendig oder vorteilhaft erachtet wird, mit einem Flammschutzmittel getränkt bzw. versetzt oder beschichtet sein, sodaß die Einlageschichte 23 als Feuerblocker wirkt. Durch die Verwendung der derart ausgebildeten und flammfest gemachten Einlageschichte 23 als Feuerblocker wird verhindert, daß beispielsweise beim Anzünden eines Feuers in einem Eisenbahnwaggon durch Vandalen oder dgl. auf der Sitzfläche das Feuer tiefer in den Sitzpolster 4 eindringt und vor allem verhindert, daß der Tragkörper 11 aus Schaumkunststoff Feuer fängt und zu einer starken Verqualmung des Waggons, beispielsweise eines S- oder U-Bahnwaggons in einem Tunnel und dgl. führt.

Die Einlageschichte 23 ist mit dem Bezugsstoff 22, bevorzugt ebenfalls über eine Kleberschichte oder über die Fläche verteilte Klebestellen verbunden. Als vorteilhafte Ausgestaltung wäre es auch möglich, die Einlageschichte 23 durch einen Kaschiervorgang unter Wärme- und Druckeinwirkung auf den Bezugsstoff 22 aufzubringen.

Ist dann das Halbfertigprodukt bzw. die Baugruppe aus dem Verkleidungselement 10 und einem Teil des Tragkörpers 11 durch die Verbindung der einzelnen vorgenannten Schichten, und zwar der Zwischenschichte 13, der schnittfesten Schutzschichte 14, der Einlageschichte 23 und dem Bezugsstoff 22 sowie der Sperrfolie 21 hergestellt, so kann dieses anschließend in einem Verprägungswerkzeug unter Einwirkung von Druck und gegebenenfalls Temperatur verformt werden. Der Vorteil dieses Aufbaus liegt darin, daß bis zur Durchführung des Prägevorgangs und dem Einlegen des so vorgefertigten Elementes bzw. der Baugruppe, die einzelnen Schichten ebenflächig aufeinander gelegt werden können, wodurch die Behandlung der einzelnen Schichten und auch deren Verbindung untereinander erheblich erleichtert werden kann.

Wird beispielsweise der Bezugsstoff 22 und gegebenenfalls die Einlageschichte 23 durch einen Kaschiervorgang miteinander verbunden, ist es auch möglich, beim gleichen Kaschiervorgang oder einem anschließenden weiteren Kaschiervorgang die Einlageschichte 23 auf die schnittfeste Schutzschichte 14 bzw. die Zwischenschichte 13 aufzukaschieren.

Ausgehend von den Reißfestigkeiten der Einlageschichte 23 bzw. der durch die schnittfeste Schutzschichte 14 verstärkten Zwischenschichte 13 wird eine Haftkraft bzw. Haltekraft eines Klebers der Kleberschichte 18 zur Bildung der Verbindungsvorrichtung 12 so festgelegt, daß sie zwischen 100 und 140 N/5 cm, bevorzugt gleich oder kleiner 125 N/5 cm, ist.

Damit kann der aus Bezugsstoff 22 und Einlageschichte 23 gebildete Verbundbauteil 24 als Gesamtes von der mit dem Tragkörper 11 über die Sperrfolie 21 durch Anschäumen verbundenen Zwischenschichte 13 abgelöst werden.

Bei einer Beschädigung des Verkleidungselementes 10 durch scharfe Gegenstände oder Schnitte durch Vandalen oder bei übermäßiger Verschmutzung oder Abnutzung des Bezugsstoffes 22 ist daher nur der Bezugsstoff 22 mit der Einlageschichte 23 zu wechseln und durch ein neues, entsprechend vorgeformtes oder geprägtes Verkleidungselement 10 zu ersetzen, da der beschädigte Bezugsstoff 22 mit der Einlageschichte 23 von der Zwischenschichte 13 in einem Arbeitsvorgang abgezogen werden kann.

Durch die entsprechende Bemessung der Haftkraft und Haltekraft des Klebers der Kleberschichte 25, die kleiner sein soll als eine Reißkraft des Bezugsstoffes 22 und bevorzugt auch kleiner als eine Reißkraft der Einlageschichte 23, wird auch eine glatte Trennung des Verkleidungselementes 10 vom Tragkörper 11 erreicht. Außerdem kann durch die Auswahl dieser Haltekraft das Verkleidungselement 10 noch manuell von dem Tragkörper 11 entfernt werden. Dadurch kann nahezu ohne Nacharbeit nur durch das Auftragen einer neuen Kleberschichte 25 eine Verbindung zwischen einem neuen Verkleidungselement 10 und dem verbleibenden Tragkörper 11, insbesondere der Zwischenschichte 13, bzw. der Schutzschichte 14 erfolgen. Dadurch wird der Gesamtaufwand für solche, insbesondere im Nahverkehr, in Bussen, U- und Schnellbahnen eingesetzte Sitzpolster 4 über längere Zeiträume betrachtet gering gehalten.

Weiters ist es durch diese rasche Möglichkeit des Austausches übermäßig stark verschmutzter Verkleidungselemente 10 möglich, diese zwischendurch auch vom Tragkörper 11 abzulösen und zentral zu reinigen, um sie danach z.B. nach Aufbringen einer neuen Kleberbeschichtung oder einer Selbstklebebeschichtung wieder auf einen Tragkörper 11 aufzubringen.

Bei der vorangegebenen Haltekraft von 100 N/5 cm bis 140 N/5 cm bevorzugt von 125 N/5 cm handelt es sich um eine Linienkraft, da beim Trennversuch von einzelnen Schichten in Ablöserichtung bzw. beim Abschälen eine Linienabtrennung zwischen den beiden Schichten, z. B. der Kleberschichte 18 und der Einlageschichte 23 erfolgt und über die vorgegebene Länge die Haftkraft den vorgegebenen Wert nicht überschreiten darf, da sonst entweder die Lösung mit manueller Kraft nicht mehr möglich ist bzw. eine Zerstörung der darunterliegenden Schichte oder ein Zerreißen der abzulösenden Schichte, z.B. der Einlageschichte 23 eintritt. Daraus ergibt sich aber auch, daß selbstverständlich die Reißfestigkeit jener einzelnen Schichten, die der lösbaren Verbindungsvorrichtung 12 benachbart sind bzw. lösbar miteinander verbunden sind, höher ist, da sie sonst beim Ablöseversuch oder Trennversuch in sich zerstört werden würde.

Der Kleber für die Kleberschichte 18, 25 kann dabei beispielsweise in einer Menge von 200 Gramm/m² aufgebracht und mittels eines Infrarotstrahlers aktiviert werden.

Vor allem wird durch die Anordnung der schnittfesten Schutzschichte 14 zwischen der Einlageschichte 23 und der Zwischenschichte 13 erreicht, daß die Eindringtiefe eines spitzen Gegenstandes, insbesondere eines Messers bei entsprechend kleiner Maschengröße des Gitters, Netzes oder Geflechtes begrenzt ist. Dadurch wird einerseits erreicht, daß auch nach einem Ablösen eines zerstörten Verkleidungselementes 10 ohne weitere Vorbehandlung ein neues Verkleidungselement 10 aufgebracht werden kann, da die Festigkeit der Zwischenschichte 13 auch nach mehreren Beschädigungen von unterschiedlichen Verkleidungselementen 10 noch eine ausreichende Festigkeit und Stabilität aufweist. Dazu kommt, daß auch bei einem eindringenden spitzen Gegenstand ein Aufplatzen der Schnittstelle nicht möglich ist, da der Einschnitt in die höher feste Zwischenschichte 13 nur sehr klein ist und außerdem ein Aufquellen durch die darüber angeordnete Schutzschichte 14, beispielsweise ein Gitter 26, ein Geflecht oder ein Netz, zuverlässig verhindert ist.

Bevorzugt ist auch eine Maschenweite 27, falls als Schutzschichte 14 bzw. 20 ein Netz bzw. Gitter 26 verwendet wird, relativ klein und beträgt zwischen 1 mm und 15 mm, bevorzugt 4 mm bis 8 mm bzw. wird ein Gewirke oder Geflecht vorgesehen. Für gewisse Anwendungsfälle kann die Maschenweite auch zwischen 2 mm und 10 mm, bevorzugt 5 mm betragen. Die Maschenweite 27 des Netzes oder des Gitters 26 verhindert nämlich ein tieferes Eindringen von spitzen Gegenständen, wie beispielsweise Messer in den Tragkörper 11 und vor allem ein tiefer gehendes Einschneiden als bis auf Höhe der Schutzschichte 14 bzw. 20.

Als vorteilhaft hat es sich erwiesen, wenn die Fasern bzw. Fäden des Netzes, Geflechtes. Gitters 26 oder Gewirkes vor allem der Schutzschichte 14 gegebenenfalls auch der Schutzschichte 20 aus Federstahl bestehen bzw. Federstahlnetze oder -gewirke verwendet werden, sodaß der Rückstelleffekt nach einer durch einen Benutzer erfolgten Sitzbelastung bzw. der Federungseffekt verbessert wird. Dadurch soll auch das Zusammensinken des Kunststoffschaums des Tragkörpers 11 bei längerer Benutzungsdauer oder länger dauerndem Einsatz vermieden werden. Um einen möglichst hohen Sitzkomfort zu erreichen, ist es selbstverständlich auch möglich, diese federnden Gewirke, Gitter 26 oder Netze entsprechend der gewünschten Sitzform, beispielsweise mit einer Ausnehmung für die Sitzfläche, räumlich zu verformen.

Der Tragkörper 11, der über die Verbindungsvorrichtung 12 mit dem Verkleidungselement 10 verbunden ist, besteht aus der Schutzschichte 14, die wie vorstehend bereits ausgeführt ausgebildet sein kann und über die Kleberschichte 18 mit der Zwischenschichte 13 verbunden ist. Auf der der schnittfesten Schutzschichte 14 gegenüberliegenden Oberfläche der Zwischenschichte 13 ist dann die Sperrfolie 21 mit der Kleberschichte 25 befestigt, an der eine einer Sitzfläche 28 des Sitzpolsters 4 zugewandte Auflagefläche 29 eines Stützelementes 30, beispielsweise durch einen Schäumvorgang angeformt ist.

Das Stützelement 30 wird dabei durch einen Kunststoffschaum 31 - schematisch durch die Schraffur angedeutet - gebildet, die aufgrund der ihr innewohnenden Haftkraft eine intensive und dauerhafte feste Verbindung zwischen dem Stützelement 30 und der Sperrfolie 21 bewirkt. Die Sperrfolie 21 ermöglicht hierbei eine Luftdichtheit des Vekleidungselementes 10, sodaß dieses in einer Schäumform spielfrei an die Formflächen angelegt werden kann und verhindert gleichzeitig, daß der üblicherweise in flüssiger Form eingebrachte Kunststoffschaum 31 in die Zwischenschichte 13 eindringt, wodurch auch die Elastizität und das Rückstellvermögen dieser Zwischenschichte 13 durch den Kunststoffschaum nicht nachteilig verändert werden kann.

Diese Ausbildung des Tragkörpers 11 ermöglicht gleichzeitig aber auch eine kostengünstige Herstellung eines Sitzpolsters 4. Durch den Aufbau der Zwischenschichte 13 in Verbindung mit der Sperrfolie 21 ist es nunmehr möglich, ohne eine nachteilige Beeinflussung des Bezugstoffes 22 den Tragkörper 11 durch einen Schäum- bzw. Spritzvorgang direkt auf die Zwischenschichte 13 aufzubringen. Die Zwischenschichte 13 ermöglicht in Verbindung mit der Einlageschichte 23, daß das Sitzgefühl und das Sitzklima durch eine Mindestelastizität angenehm gestaltet wird, ohne daß es beim Zerschneiden des Bezugsstoffes 22 zu einem Aufplatzen desselben kommt und andererseits wird dadurch die auf den Bezugsstoff 22 einwirkende Scheuerbelastung durch die Schutzschichte 14 und gegebenenfalls 20 erheblich verringert, sodaß ein Durchscheuern des Bezugsstoffes 22 auch in den Kantenbereichen des Sitzpolsters 4 zuverlässig verhindert wird.

Dadurch wird der Gesamtaufwand für solche insbesondere im Nahverkehr, in Bussen, U- und Schnellbahnen eingesetzte Sitzpolster 4 über längere Zeiträume betrachtet gering gehalten.

Gleichzeitig wird aber ein Aufplatzen des Bezugsstoffes 22 des Verkleidungselementes 10, wie es in den Fig. 2 bis 4 gezeigt ist, verhindert, wenn dieser mit scharfen Kanten bzw. einem Messer aufgeritzt bzw. zerschnitten wird.

Dies deshalb, da der Bezugsstoff 22 eine Dicke von ca. 0,2 mm bis 3 mm, die Einlageschichte 23, also das Geflecht, Netz oder Gitter zwischen dem Bezugsstoff 22 und der Zwischenschichte 13 eine Dicke von etwa 0,2 mm bis 5 mm, bevorzugt 0,5 - 1 mm, aufweist.

Durch die geringe Dicke der Einlageschichte 23 von 0,2 mm bis 5 mm, bevorzugt 0,5 mm bis 1 mm und durch deren Ausbildung ist keine elastische Vorspannkraft, die zu einem Hochheben des Bezugsstoffes 22 an Schnitträndern 32 eines Schnittes 33 führt, vorhanden, sodaß die Schnittränder 32 des Schnittes 33 in einer zueinander im wesentlichen parallelen Lage verbleiben, also nicht aufquellen, sondern sich nach dem Herausziehen des Schneidewerkzeuges von selbst aneinanderlegen und schließen. Dazu kommt, daß durch die Schutzschichte 14 ein tiefes Eindringen auch von scharfen Schnittwerkzeugen, wie Messern und dgl. verhindert wird, sodaß auch bei größter Gewaltanwendung ein größerflächiges Zerstören des Verkleidungselementes 10, sowie ein tieferes Zerstören der Struktur des Tragkörpers 11 verhindert wird.

Eine Schichtdicke der Zwischenschichte 13, gegebenenfalls inklusive der darin eingebetteten Schutzschichte 20 beträgt 0,5 mm bis 50 mm, bevorzugt 0,5 mm bis 20 mm, wobei, falls eine Schutzschichte 20 angeordnet ist, sich diese etwa mittig in Höhenrichtung der Zwischenschichte 13 befindet. Selbstverständlich ist es aber auch möglich, daß die Schutzschichte 20 näher dem Tragkörper 11 bzw. dem Bezugsstoff 22 angeordnet ist.

Wie weiters aus der Darstellung in Fig. 2 ersichtlich ist, kann der Tragkörper 11 auf der vom Verkleidungselement 10 abgewendeten Seite mit einer Abdeckschichte 34 z.B. aus einem Silikonkautschukschaum bzw. einer Recyclingkunststoffmatte ähnlich der Zwischenschichte 13 versehen sein. Diese verhindert eine Abnutzung der von der Sitzfläche 28 abgewendeten Seite des Tragkörpers 11 bei seiner Auflage am Traggestell 2, sodaß die Schaumstruktur des Tragkörpers 11 nicht nach außen hin austreten kann, wodurch auch die flamm- bzw. brandhemmenden Eigenschaften des Sitzpolsters 4 verbessert werden können. Die Recyclingkunststoffmatte kann ähnlich, z. B. aber auch mit einem höheren Anteil an Füllstoffen 16, 17, wie die Zwischenschichte 13 ausgebildet sein. Gegebenenfalls ist es aufgrund der Beanspruchungsverhältnisse notwendig, das Raumgewicht dieser Recyclingkunststoffmatte, die die Abdeckschichte 34 bildet, höher zu wählen als bei der Zwischenschichte 13, um eine bessere Druckverteilung über die einzelnen Tragstäbe des Traggestells 2 und somit ein Durchsitzen des Sitzpolsters 4 in einzelnen Bereichen zu verhindern. Dazu kann es in einer weiteren Variante vorteilhaft sein, die Abdeckschichte 34 vor ihrem Einsatz thermisch zu verdichten.

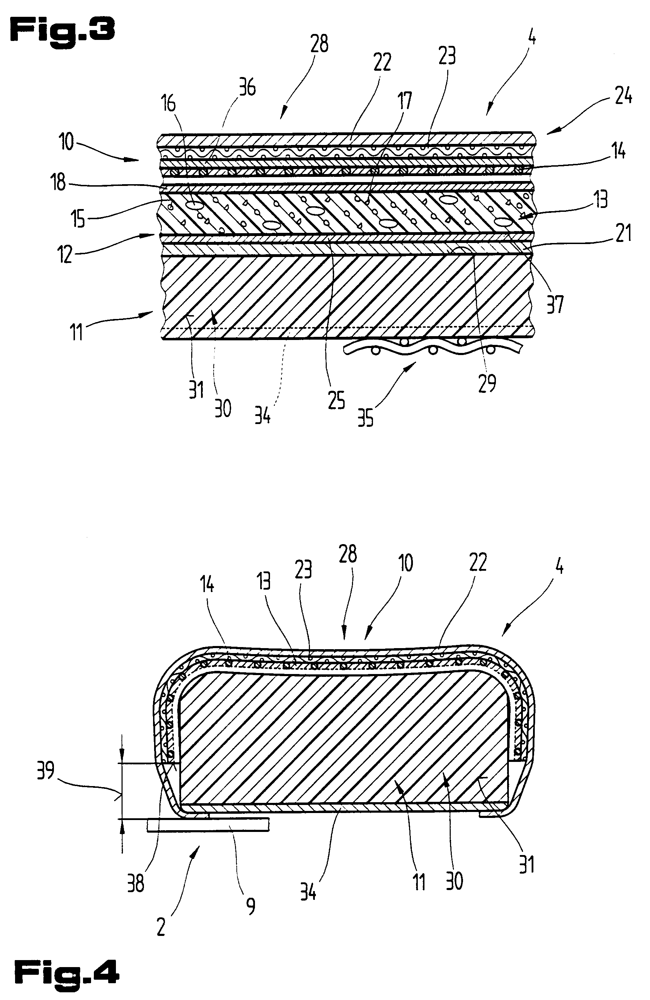

In Fig. 3 ist der Sitzpolster 4 nach Fig. 2 in Stirnansicht mit geringfügigen Abänderungen gezeigt, wobei in Ergänzung zu den Ausführungen in Fig. 2 zu ersehen ist, daß auf der von der Zwischenschichte 13 abgewendeten Seite der Abdeckschichte 34 ein Verstärkungsgewebe 35 in Form eines Netzes, Gitters, Gewirkes oder Vlieses aus hochbeanspruchbaren Fäden oder Fasern, wie beispielsweise aus Graphit, Keramik, Glas oder Metall angeordnet sein kann. Des weiteren ist aus dieser Ausführungsform zu ersehen, daß die Zwischenschichte 13 durch einen einlagigen Bauteil aus Kunststoffschaum mit darin eingebetteten unterschiedlichen Füllstoffen 16, 17 gebildet sein kann. In diesem Fall ist in diese Zwischenschichte 13 auch keine weitere Schutzschichte 20 eingebettet. Die Zwischenschichte 13 ist z.B. über eine Kleberschichte 36 und die Kleberschichte 18 in die schnittfeste Schutzschichte 14 eingebettet mit der Einlageschichte 23 und über diese mit dem Bezugsstoff 22 zu einem einstückigen Verbundhauteil 24 verbunden. Bei dieser Ausführungsform kann daher der gesamte Verbundbauteil 24 von dem Tragkörper 11 bzw. der die Auflagefläche 29 des Tragkörpers 11 bildenden Schutzschichte 14 abgelöst werden und ein neuer Verbundbauteil 24 auf diesen aufgebracht werden. Der Kleber der Kleberschichte 36 ist dann wiederum mit der vorstehend bereits erläuterten Haftkraft auszubilden.

Weiters wird durch die Anordnung der Sperrfolie 21 erreicht, daß eine dem Stützelement 30 zugewandte Oberfläche 37 der Zwischenschichte 13 flüssigkeitsdicht bzw. mit überwiegend geschlossenen Zellen ausgebildet ist, sodaß auch der zur Herstellung des Kunststoffschaums des Tragkörpers 11 benötigte, beim Aufbringen flüssige Kunststoffschaum 31 nicht in diese Zwischenschichte 13 eindringen kann. Von besonderem Vorteil ist es jedoch, wenn diese Sperrfolie 21 nicht nur flüssigkeitsdicht, sondern gasdicht ausgeführt ist, sodaß das Verkleidungselement 10 über Vakuum in einer Form zur Herstellung des Tragkörpers 11 bzw. dessen Stützelementes 30 einfach positioniert und gehalten werden kann. Dadurch ist es nämlich in weiterer Folge auch möglich, den Bezugsstoff und die insbesondere als Feuerblocker wirkende Einlageschichte 23 und auch die die Verbindungsvorrichtung 12 bildende Kleberschichte und gegebenenfalls sogar die Zwischenschichte 13 mit einer ausreichenden Luftdurchlässigkeit bzw. Dampfdiffusionsfähigkeit auszubilden, sodaß trotz der zum Positionieren des Verkleidungselementes 10 benötigten luftdichten Sperrfolie 21 ein vor allem für den Kurzstreckenbetrieb in Nahverkehrsfahrzeugen benötigter Sitzkomfort geschaffen bzw. aufrecht erhalten werden kann.

In Fig. 4 ist eine Ausführungsvariante eines Sitzpolsters 4 gezeigt, bei der der Bezugsstoff 22 über eine Einlageschichte 23 direkt auf die, mit der schnittfesten Schutzschichte 14 verstärkte Zwischenschichte 13 aufkaschiert ist. Des weiteren ist auch in diesem Fall nur auf der Zwischenschichte 13 eine Schutzschichte 14 angeordnet, um diese vor Zerstörungen zu schützen. Die Ausbildung auf der vom Bezugsstoff 22 abgewandten Unterseite des Sitzpolsters 4 mit einer Abdeckschichte 34 kann wieder, wie beispielsweise bereits anhand Fig. 2 und Fig. 3 beschrieben, erfolgen.

Da die Zwischenschichte 13 mit der aufgelegten Schutzschichte 14 verstärkt und da diese vor allem bei auf diese in der Ebene der Zwischenschichte 13 einwirkenden Belastungen relativ steif ist, ist es vorteilhaft, wenn eine umlaufende Stirnkante 38 der Zwischenschichte 13 und/oder der Schutzschichte 14 in einem Abstand 39 von einem Traggestell 2 bzw. dem Verkleidungselement 10 endet, sodaß bei einer durch einen Benutzer erfolgenden Belastung auf den Sitzpolster 4 von oben her durch das Zusammendrücken des Tragkörpers 11 bzw. der Verformung der Schutz- bzw. Zwischenschichte 14,13 die stark versteifte Stirnkante 38 nicht gegen das Verkleidungselement 10 und das Traggestell 2 drückt und so gegebenenfalls den Bezugsstoff 22 durchwetzt oder andere Teile des Sitzes 1 beschädigt.

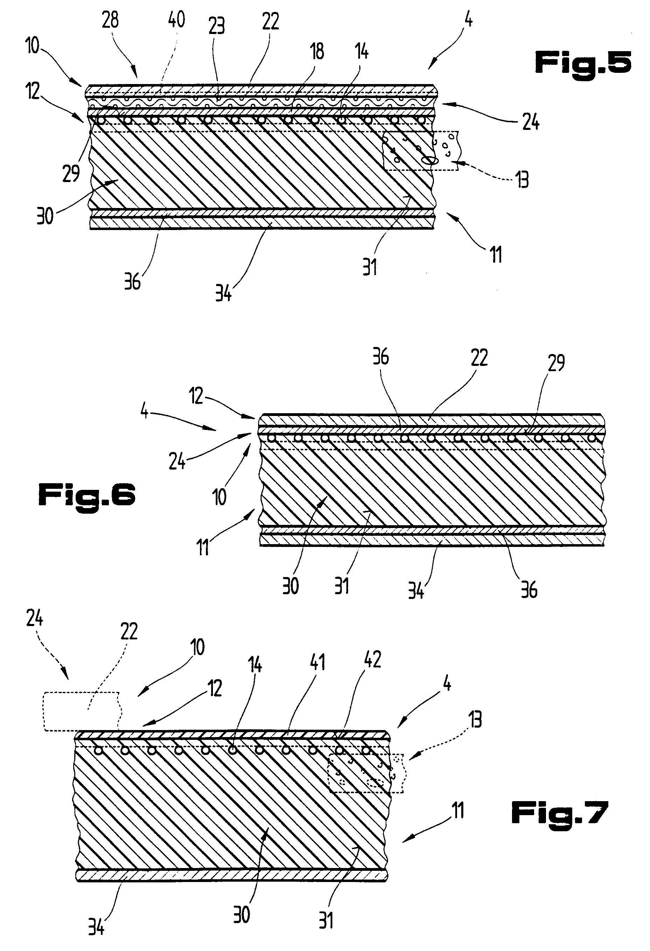

In Fig. 5 ist eine Ausführungsvariante des erfindungsgemäß ausgebildeten Sitzpolsters 4 gezeigt, bei der wiederum ein Bezugsstoff 22 mit einer Einlageschichte 23, gegebenenfalls über eine Kleberschichte 40 zu einem eigenen Verbundbauteil 24 zusammengefügt ist.

Die Einlageschichte 23 ist über die Kleberschichte 18 an der Schutzschichte 14 befestigt.

Eine derartige Ausbildung bringt den Vorteil, daß der Verbundbauteil 24 in ebenflächiger Lage hergestellt werden kann, indem auf den ebenflächigen Bezugsstoff 22 die Einlageschichte 23, beispielsweise über die Kleberschichte 40, verbunden werden kann. Dieser ebenflächige Zuschnitt kann dann in einer eigenen Prägeform auch zu einer gewünschten Raumform räumlich verformt werden. Es ist selbstverständlich aber auch möglich, diese Verformung beim Einlegen des Zuschnittes in eine Schäumform zur Her tellung des Tragkörpers 11 aus einem Kunststoffschaum 31 vorzunehmen.

Die schnittfeste Schutzschichte 14 besteht aus einem Gewebe, Netz, Gewirke oder Geflecht aus schnittfesten Fasern bzw. Fäden, insbesondere einem Federstahl oder dgl., wie dies bereits anhand der vorstehenden Ausführungsbeispiele erläutert wurde, wobei auch für die Ausbildung dieser Schutzschichte 14 dieselben bereits vorstehend beschriebenen Ausführungsformen verwendet werden können.

Der Vorteil dieser Lösung liegt darin, daß durch entsprechende Bemessung der Festigkeit bzw. der Haftkraft der Kleberschichte 18 zwischen dem Verkleidungselement 10 bzw. dem Verbundbauteil 24 und dem Tragkörper 11 das Verkleidungselement 10 bei dem notwendigen Austausch des Verbundbauteiles 24 im Bereich dieser Kleberschichte 40 von der schnittfesten Schutzschichte 14 abgelöst und entfernt bzw. durch einen neuen Verbundbauteil 24 ersetzt werden kann. Damit ist auch die Einstellung der Haftkraft des Kunststoffschaums 31 bei der Herstellung eines derartigen Sitzpolsters 4 unkritisch, da die Festlegung der maximalen Haftkraft bzw. der notwendigen Reißkraft zum Ablösen des Verbundbauteiles 24 in Höhe von 100 N/5 cm bis 140 N/5 cm, bevorzugt 110 N/5 cm bis 125 N/5 cm, durch die geeignete Auswahl des Klebers für die Kleberschichte 18 bzw. durch die aufgetragene Schichtdicke des Klebers in einfacher Weise erzielt werden kann. Die Schutzschichte 14 weist eine Haltekraft größer als 125 N/5 cm im Kunststoffschaum 31 auf.

Damit kann trotz des Einschäumens der Schutzschichte 14 in das Stützelement 30 des Tragkörpers 11 und der ebenflächigen Herstellung des Verbundbauteiles 24 eine nachträgliche Trennung der beiden Teile unter Beibehaltung und weiterer Verwendung der schnittfesten Schutzschichte 14 erfolgen und werden bei der Auswechslung der Verbundbauteile 24 nur solche Verbundbauteile 24 benötigt, die aus dem Bezugsstoff 22, der Einlageschichte 23 und gegebenenfalls der Kleberschichte 18 bestehen. Die Verbindung zwischen diesem neu aufzubringenden Verbundbauteil 24 und dem verbleibenden Restteil aus der schnittfesten Schutzschichte 14 und dem Tragkörper 11 kann beispielsweise über das partielle oder vollflächige Aufbringen eines weiteren Klebers, beispielsweise der gleichen Art wie die Kleberschichte 18 erfolgen.

Wie weiters in Fig. 5 schematisch angedeutet, ist es auch möglich, in Teilbereichen des Tragkörpers 11 bzw. über die gesamte Auflagefläche 29 eine Zwischenschichte 13 in der vorbeschriebenen, insbesondere der im Ausführungsbeispiel gemäß den Fig. 1 bis 4 näher angezeigten Ausbildung anzuordnen. Wird eine derartige Zwischenschichte 13 vorgesehen, so ist die schnittfeste Schutzschichte 14 auf der dem Verbundbauteil 24 zugewandten Oberfläche, beispielsweise über eine Kleberschichte befestigt bzw. in diese Kleberschichte zur Verbindung des Tragkörpers 11 mit dem Verbundbauteil 24 eingebettet.

Der Kunststoffschaum 31 des Tragkörpers 11 ist in diesem Fall dann auf die von der schnittfesten Schutzschichte 14 abgewendeten Oberfläche der Zwischenschichte 13 durch einen Schäumvorgang angeformt.

Auch bei dieser Ausführungsform ist es zur Verstärkung der von der Sitzfläche 28 abgewendeten Oberfläche des Tragkörpers 11 möglich, eine Abdeckschichte 34 anzuordnen. Die Befestigung der Abdeckschichte 34 am Tragkörper 11 kann ebenfalls durch den Anschäumvorgang unter Verwendung des Kunststoffschaums 31 erfolgen.

Selbstverständlich ist es aber auch, wie schematisch gezeigt möglich, diese Abdeckschichte 34 nachträglich auf den aus dem Kunststoffschaum 31 gebildeten Tragkörper 11 über eine Kleberschichte 36 anzubringen bzw. zur Haftungserhöhung eine derartige Kleberschichte 36 vorzusehen.

In Fig. 6 ist eine weitere Ausführungsvariante eines Sitzpolsters 4 gezeigt, bei dem der Verbundbauteil 24 lediglich aus einem Bezugsstoff 22 besteht, der über die Kleberschichte 36, die dann die Verbindungsvorrichtung 12 bildet, unmittelbar auf die Auflagefläche 29 des Tragkörpers 11 aufgebracht ist. Der Tragkörper 11 kann wiederum aus einem Kunststoffschaum 31, wie dieser anhand der vorhergehenden Ausführungsbeispiele erläutert worden ist, hergestellt sein. Der Kunststoffschaum 31 kann dabei durch einen überwiegend offenzelligen Polyurethan-Kunststoffschaum gebildet sein. Es ist aber auch möglich Polyurethan- Integralschäume, Polyesterschäume oder Polyetherschäume für die Herstellung des Sitzpolsters 4 zu verwenden.

Auf der von der Auflagefläche 29 abgewandten Oberfläche des Tragkörpers 11 kann wiederum eine Abdeckschichte 34 angeordnet sein. Die Verbindungsvorrichtung 12 zwischen der Auflagefläche 29 des Tragkörpers 11 und dem Bezugsstoff 22 wird im vorliegenden Fall durch die Kleberschichte 36 gebildet, die wiederum so auszubilden ist, daß eine Haltekraft von ca. 100 N/5 cm - 140 N/5 cm der Kleberschichte bei einem Abziehen bzw. Abschälen des Bezugsstoffes 22 von der Auflagefläche 29 auf einer Länge von 5 cm geringer ist als die Reißkraft des Bezugsstoffes 22 und die Haltekraft der schnittfesten Schutzschichte 14 in dem der Auflagefläche 29 zugewandten Oberflächenbereich des Stützelementes 30.

Dadurch ist es möglich, daß ohne Zerstörung des Tragkörpers 11 eine Ablösung des Verbundbauteiles 24 bzw. des Bezugstoffes 22 erfolgen kann, sodaß nach einer Beschädigung oder einer Verschmutzung des Bezugstoffes 22 dieser einfach von dem höherwertigen Grundaufbau des Sitzpolsters 4 gelöst und durch einen neuen Bezugsstoff 22 ersetzt werden kann.

Die Ausführungsvariante zeigt weiters, daß es auch ausgehend von dem Lösungsvorschlag die Verbindungsvorrichtung mit einer vordefinierten Haftkraft, beispielsweise zwischen 100 N/5 cm und 140 N/5 cm, bevorzugt 110 N/5 cm bis 125 N/5 cm auszubilden, möglich ist, unterschiedlich ausgestaltete Verbundbauteile 24 auf dem Tragkörper 11 als Verkleidungselement 10 anzuordnen, sodaß den unterschiedlichen Komfortansprüchen und den unterschiedlichen Plankosten entsprechende Ausführungsvarianten des Sitzpolsters 4 mit in etwa gleichem Grundaufbau und Fertigungsmethoden herstellbar sind.

In Fig. 7 ist weiters gezeigt, wie bei den Ausführungsformen der in den Fig. 5 und 6 dargestellten Sitzpolstern 4, der Tragkörper 11 bzw. das Stützelement 30 aus Kunststoffschaum 31 hergestellt und in einem Arbeitsgang die schnittfeste Schutzschichte 14 so eingearbeitet werden kann, daß ein ausreichender Sitzkomfort auch dann erreicht wird, wenn der Verbundbauteil 24 nur durch den Bezugsstoff 22 gebildet ist.

Dazu wird die schnittfeste Schutzschichte 14, beispielsweise das Gitter 26, Gewirke, Geflecht oder Gewebe, welches üblicherweise luftdurchlässig ist, mit einer luft- bzw. gasdichten Folie 41 belegt bzw. diese aufgeklebt oder durch Erwärmen der Folie 41 an der Schutzschichte 14 befestigt. Als Folie 41 kann beispielsweise eine Polyäthylenfolie oder eine Polypropylenfolie mit einer Kleberbeschichtung verwendet werden, die bzw. das luftdicht ist, oder auch ein sogenanntes Prepreg, also durch einen Bauteil aus einem bei Raumtemperatur an der Oberfläche leicht anhaftenden Folien- bzw. Gewebeverbund. Dadurch kann die Schutzschichte 14, beispielsweise durch vorhergehende oder gleichzeitige räumliche Verformung in eine Schäumform eingelegt und aufgrund der luftdichten Folie 41 spielfrei an einer Formwand und der Schaumform gehalten werden. Danach kann das flüssige Material des Kunststoffschaums 31 zur Herstellung des Kunststoffschaums 31 für den Tragkörper 11 in die Form eingebracht werden und aufschäumen, sodaß eine intensive Verbindung und/oder Einbettung der schnittfesten Schutzschichte 14 bzw. des Gitters, Geflechtes oder Gewebes in dem einer Auflagefläche 42 für den Verbundbauteil 24 zugewandten Oberflächenbereich möglich ist. Nach dem Aushärten des Kunststoffschaums 31 wird dann der Tragkörper 11 aus der Schäumform entnommen. Gleichzeitig mit dessen Herstellung kann auch die Abdeckschichte 34 am Tragkörper 11 angeformt werden.

Danach wird die luft- bzw. gasdichte Folie 41, deren Reißfestigkeit so hoch bemessen ist, daß die Haftkraft des daran angeformten Kunststoffschaums 31 geringer ist, ohne daß der Kunststoffschaum 31 im Bereich der Auflagefläche 42 des Tragkörpers 11 zerstört wird, abgelöst. Vor allem erweist es sich hierbei als vorteilhaft, wenn eine Polyäthylen- oder Polypropylenfolie verwendet wurde, an der der Polyurethanschaum bzw. der verwendete Schaumstoff nicht so intensiv anhaftet, wie wenn z.B. die Folie 41 aus dem gleichen Grundmaterial, z.B. Polyurethan wäre.

Selbstverständlich wäre es aber auch denkbar, eine Polyurethanfolie zu verwenden, auf die eine zu starke Anhaftung unterbindende Trennmittelschichte aufgebracht ist. Eine Zerstörung des Kunststoffschaums 31 im Bereich der Auflagefläche 42 wird vor allem auch durch die in diesem Bereich erfolgte Anordnung der Schutzschichte 14, die den Kunststoffschaum 31 in diesem Bereich verstärkt, verhindert. Nachdem diese Folie 41 abgelöst ist, kann dann die Kleberschichte 36 aufgetragen werden, wie beispielsweise in Fig. 5 oder 6 gezeigt, über die dann der Verbundbauteil 24 mit einer vordefinierten Haftkraft auf dem Tragkörper 11 befestigt werden kann.

Durch die Verstärkung dieses Trennbereichs bzw. des Bereichs der Verbindungsvorrichtung 12 durch die schnittfeste Schutzschichte 14 kann auch ein mehrfaches Ablösen und Wiederbefestigen eines Verbundbauteiles 24 bzw. eines Verkleidungselements 10 erfolgen, ohne daß der Tragkörper 11 zerstört wird.

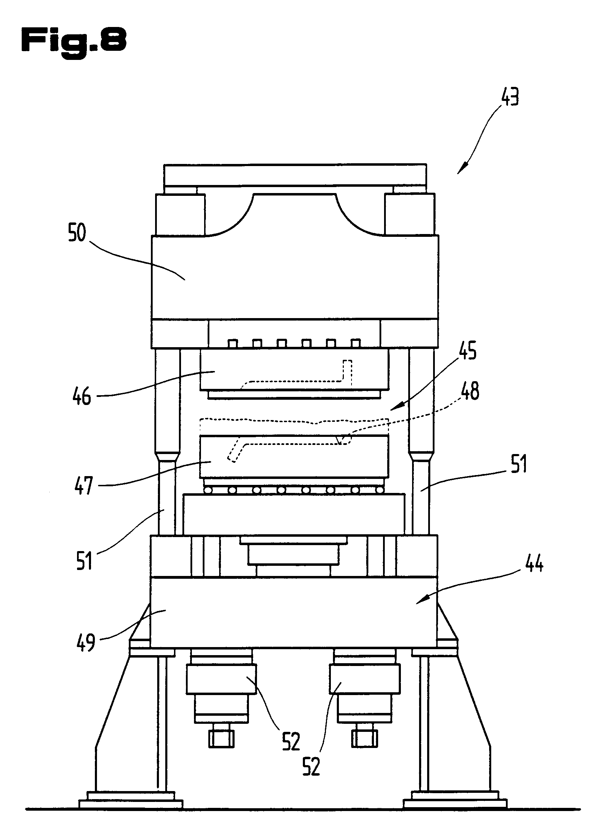

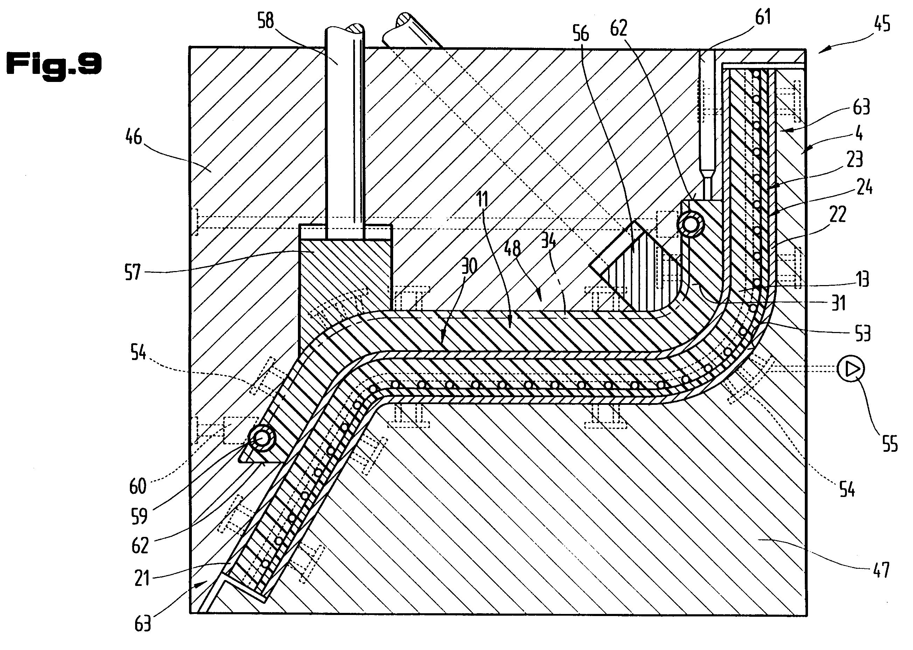

In den Fig. 8 und 9 ist eine Vorrichtung 43 zur Herstellung der Sitzpolster 4 in vereinfachter schematischer Darstellung gezeigt.

In einem Traggestell 44 ist eine Form 45 angeordnet, die aus einem Formoberteil 46 und einem Formunterteil 47 gebildet ist, die zwischen sich einen Formhohlraum 48 einschließen.

Der Formunterteil 47 und der Formoberteil 46 sind jeweils auf Aufspannplatten 49 und 50 befestigt, die über Führungssäulen 51, mittels Verstellantrieben 52, beispielsweise Hydraulikzylinder relativ zueinander verstellbar und somit aus der in den vollen Linien gezeichneten Öffnungsstellung in eine durch strichlierte Linien angedeutete Schließstellung verstellbar sind.

Wie besser aus der Darstellung in Fig. 9 zu ersehen ist, wird in dem Formunterteil 47, beispielsweise ein Verbundbauteil 24, welcher beim gezeigten Ausführungsbeispiel entsprechend der Darstellung in Fig. 3 ausgebildet, ist eingelegt. Beispielsweise kann zu diesem Zeitpunkt der Verbundbauteil 24 noch ebenflächig ausgebildet sein. Da dieser Verbundbauteil 24 durch die auf der vom Bezugsstoff 22 abgewendeten Seite angeordneten Sperrfolie 21 luftdicht ist, kann beispielsweise der Verbundbauteil 24 händisch auf eine Auflagefläche 53 des Formunterteils 47 aufgelegt und manuell soweit vorpositioniert werden, daß der Verbundbauteil 24 durch das durch Vakuumöffnungen 54 eines Vakuumsystems mit einer Vakuumpumpe 55 aufgebaute Vakuum grob positioniert gehaltert werden kann.

Darauf kann der Formoberteil 46 in Richtung des Formunterteils 47 abgesenkt und auf den Formunterteil 47 aufgesetzt werden. Mit schematisch im Formoberteil 46 angedeuteten Stempeln 56, 57, die mittels Führungssäulen 58 im Formoberteil 46 geführt und mittels nicht gezeigter Verstellantriebe relativ zum Formoberteil 46 verstellt werden können, kann dann eine endgültige Formgebung und eine vollflächige Anlage des Verbundbauteiles 24 an der Auflagefläche 53 sichergestellt werden.

Vor dem Aufsetzen des Formoberteils 46 auf den Formunterteil 47 können beispielsweise Rohre 59 in den Formhohlraum 48 eingelegt und am Formoberteil 46, beispielsweise über Magnete 60 positioniert werden, um den Sitzpolster 4 auf dem Traggestell 2 eines Sitzes 1 in einem Eisenbahnwaggon befestigen zu können. Des weiteren ist es, wie schematisch durch strichlierte Linien angedeutet, auch möglich, über die im Formoberteil 46 ebenfalls schematisch eingezeichneten Vakuumöffnungen 54, die auch den beweglichen Stempeln 56, 57 benachbart angeordnet sein können, eine Abdeckschichte 34 positioniert zu halten, bevor der flüssige Kunststoff bzw. das Rohmaterial des herzustellenden Kunststoffschaumes 31, insbesondere eines Schaumkunststoffes aus Polyurethan in den Formhohlraum 48 eingebracht wird.

Wird eine derartige Abdeckschichte 34 eingebracht, so ist es zweckmäßig, nach dem Verformen des Verbundbauteil 24 den Formoberteil 46 nochmals kurz abzuheben und die Abdeckschichte 34 einzulegen.

Der flüssige Kunststoff kann entweder bei geöffneter Form 45 oder über schematisch angedeutete Einspritzöffnung 61 zugeführt werden. Dafür können bekannte Einspritzsysteme, die beim jeweiligen Spritzvorgang auch manuell mit der Einspritzöffnung 61 verbunden werden können, eingesetzt werden.

Wesentlich ist bei der Herstellung dieser Form 45, daß das Verbundbauteil 24 und insbesondere, die auf der vom Bezugsstoff 22 abgewendeten Oberfläche der Zwischenschichte 13 angeordnete, flüssigkeitsdichte Sperrfolie 21 über Stirnkanten 62 des Stützelementes 30 in einen Vorsprung 63 des Formhohlraums 48 vorragen und dort durch eine entsprechende Gestaltung des Formunterteils 47 und Formoberteils 46 eingespannt gehaltert sind. Damit wird verhindert, daß beim Einbringen des Kunststoffschaums 31 bzw. dessen flüssigen Rohmaterials dieses in die benachbarte Zwischenschichte 13 eindringt und diese unerwünscht verstärken kann. Andererseits kann damit auch eine Verschmutzung der übrigen Teile des Sitzpolsters während des Schäumvorganges des Stützelementes 30 verhindert werden.

Nach dem Entnehmen des Sitzpolsters 4 aus der Form 45 kann die Sperrfolie 21 in dem das Stützelement 30 überragenden Bereich entfernt und der Verbundbauteil 24 über die Stirnkanten 62 des Stützelementes 30 herumgeschlagen und auf der vom Verbundbauteil 24 abgewendeten Oberfläche des Stützelementes, beispielsweise unter Zwischenschaltung von Klettbändern oder dgl., befestigt werden.

Mit diesem Herstellungsverfahren wird ein äußerst stabiler Aufbau eines derartigen Sitzpolsters 4 erreicht, der eine hohe Strapazfähigkeit aufweist und daher auch beim Einsatz in Nahverkehrsfahrzeugen, wie beispielsweise U-Bahnen und Schnellbahnen und Autobussen bestens geeignet ist.

Ein ähnlicher Aufbau der Form 45 kann aber auch für die Herstellung des Tragkörpers 11, wie er beispielsweise in Fig. 7 dargestellt ist, verwendet werden. In diesem Fall wird der Verbundbauteil 24 nur durch die schnittfeste Schutzschichte 14 und die luftdichte Folie 41 gebildet. Durch die Verbindung der Schutzschichte 14 mit der Folie 41 kann die Schutzschichte 14 in gleicher Art wie der Verbundbauteil 24 aufgrund der Sperrfolie 21 luftdicht ausgestaltet werden und damit über die Vakuumöffnungen 54 in einer exakten Position in der Form 45, insbesondere im Formunterteil 47, gehaltert werden.

Somit ist es auch möglich, durch Verwendung entsprechend gestalteter Formeinsätze unter Verwendung der gleichen Form 45 Stützelemente 30 für ähnlich gestaltete Sitzpolster 4 mit unterschiedlich aufgebauten Verbundbauteilen 24 herzustellen.

Nach dem Fertigstellen des Stützelementes 30 bzw. des Tragkörpers 11 kann der Kunststoffschaum 31 in beliebiger, aus dem Stand der Technik bekannter Art, beispielsweise durch Walken, Pressen, Drücken, bearbeitet werden, um ein Aufbrechen der einzelnen Zellen im Kunststoffschaum 31 und damit eine bessere Durchlüftung zu erzielen.

Während bei der Ausführungsvariante des Sitzpolsters 4 gemäß den Fig. 1 bis 4 eine höhere Stabilität und Widerstandsfestigkeit gegen Beanspruchungen der Sitzpolster 4 durch Vandalen und durch häufigen Fahrgastwechsel sichergestellt ist, wird durch das direkte Anschäumen des Stützelementes 30 an dem Verbundbauteil 24 und die dadurch notwendige Zwischenschaltung der Sperrfolie 21 bzw. beispielsweise eine entsprechend luftdichte Abdeckschichte aus Kleber oder dgl. die Atmungsfähigkeit bzw. der Luftdurchlaß vom Verbundbauteil 24 in Richtung des Stützelements 30 behindert. Dies kommt jedoch bei diesem Sitzpolster 4 insofern nicht so stark zum Tragen, da das Verbundbauteil 24 bzw. das Verkleidungselement 10 eine größere Dicke aufweist und damit bereits eine höhere Feuchtigkeitsaufnahme bei einer länger andauernden Benutzung ermöglicht, wobei jedoch die Benutzungszeiten der Sitze in Nahverkehrsmitteln erfahrungsgemäß gegenüber dem Langstreckenverkehr sehr kurz sind und somit ein rascheres Erholen und Austrocknen des Sitzpolsters 4 gewährleistet ist.

Dagegen wird bei der Ausführungsvariante gemäß den Fig. 5 bis 7 eine durchgehende Durchlüftung des Sitzpolsters 4 auch durch den Tragkörper 11 bzw. dessen Stützelement 30 erreicht, da die luftundurchlässige Folie 41 nur zum Herstellen des Stützelementes 30 und zur Positionierung der schnittfesten Schutzschichte 14 benötigt und danach entfernt werden kann, sodaß eine gute Durchlüftung vom Bezugsstoff 22 des Verkleidungselementes 10 in Richtung des Tragkörpers 11, sowohl bei Verwendung nur eines Bezugsstoffes 22 als Verbundbauteil 24, als auch bei Verwendung einer Einlageschichte 23 zwischen dem Bezugsstoff 22 und dem Tragkörper 11, die beispielsweise auch als Feuerblocker ausgebildet sein kann, erreicht wird. Diese Sitze, wie sie hauptsächlich in Fernzügen verwendet werden, weisen eine höhere Benutzungsdauer auf, wobei durch das größere Volumen des den Tragkörper 11 bildenden Kunststoffschaumes 31 ein größeres Volumen an Feuchtigkeit aufgenommen und eine bessere Wärmeabfuhr ermöglicht wird, sodaß auch bei längerer Benutzungsdauer bei derart ausgebildeten Sitzen ein angenehmes Sitzklima erhalten ist. Dieselbe Ausbildung, wie sie anhand der Fig. 2 bis 4 für die Zwischenschichte 13 beschrieben ist, kann z.B. auch für die Herstellung der Abdeckschichte 34 verwendet werden.

Abschließend sei noch darauf hingewiesen, daß selbstverständlich die Materialien für die einzelnen Lagen bzw. Schichten des Sitzpolsters 4 beliebig gewählt werden können. So ist es unter anderem möglich, daß das Stützelement 30 des Tragkörpers 11 durch einen Formkaltschaum mit einem Raumgewicht von 40 kg/m³ bis 80 kg/m³ gebildet ist. Dieser kann zusätzlich, falls dies erwünscht ist, flammhemmend eingestellt sein und dazu mit pulverförmigen Flammschutzmitteln, z.B. bestehend aus einem Pulver aus Melaminharz und/oder Aluminiumhydroxyd und/oder Amonpolyphosphat versetzt sein.

Der Bezugsstoff 22, der nach beliebigen Verfahren als Vlies, Flor, Gewirke oder Gewebe oder dgl. hergestellt sein kann, kann ebenfalls flamm- bzw. brandhemmend eingestellt sein, und beispielsweise aus ca. 59 % Wolle, zirka 25 % - 35 % Baumwolle oder 6 % - 15 % Polyester gebildet sein. Es ist aber auch möglich, Stoffe aus 81 % Baumwolle und 19 % Polyester zu verwenden.

Schließlich ist es auch möglich, daß das Stützelement 30 des Tragkörpers 11 entsprechend der Zwischenschichte 13 aus einem aus Primärmatierial bestehenden Kunststoffschaum 31 gebildet sein kann, in dem Füllstoffe 16,17 wie sie unter anderem zur Herstellung der Zwischenschichte 13 beschrieben sind, eingebracht sind. Bevorzugt wird dabei das Raumgewicht eines derart hergestellten Stützelementes 30, im Bereich zwischen 40 kg/m³ bis 250 kg/m³ festgelegt und wird entgegen der Zwischenschichte 13 dieses, das Stützelement 30 bildende Bauelement nach der Herstellung nicht einer Temperatur und Druckeinwirkung bzw. einer Erhitzung durch hochfrequente Energiestrahlungen und beheizte Formflächen unterworfen und damit kann auch für die Herstellung des Stützelementes 30 Recyclingmaterial verwendet und der Primärmaterialanteil verringert werden.

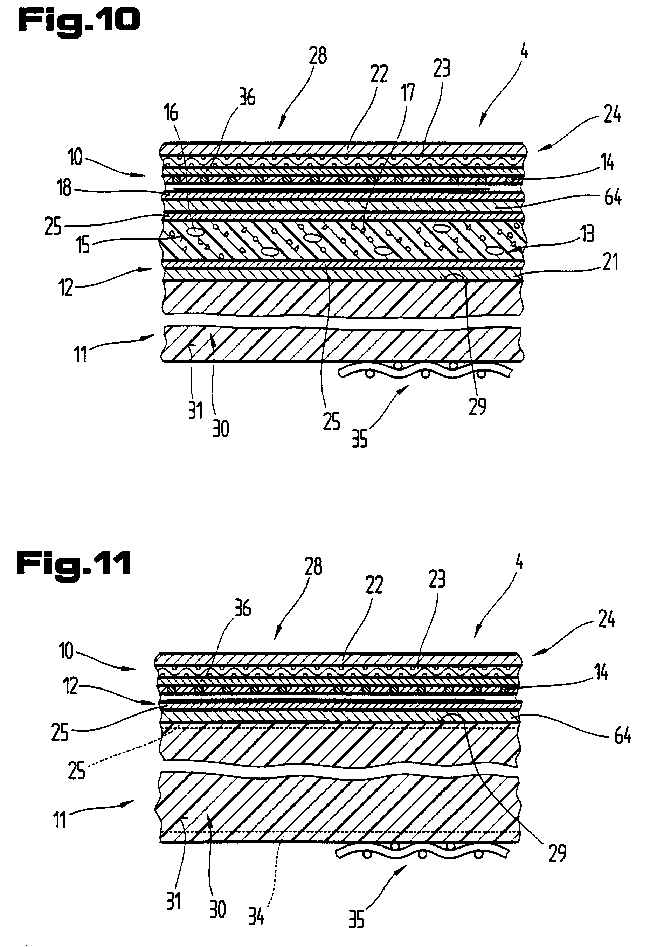

In den Fig. 10 und 11 sind weitere Ausführungsmöglichkeiten des erfindungsgemäß ausgebildeten Sitzpolsters 4 gezeigt, wobei wiederum, soweit wie möglich, für gleiche Teile gleiche Bezugszeichen verwendet wurden.

So ist in Fig. 10 ein Teil des Sitzpolsters 4 in Seitenanschicht, geschnitten und vereinfachter schematischer Darstellung gezeigt. Das Verkleidungselement 10 ist wiederum als Verbundbauteil 24 ausgebildet und besteht aus dem Bezugsstoff 22, der Einlageschichte 23 und der schnittfesten Schutzschichte 14, welche über die Kleberschichte 36 mit der Einlageschichte 23 bzw. dem Bezugsstoff 22 verbunden ist. Diese schnittfeste Schutzschichte 14 besteht aus einem Gewebe, Netz, Gewirke oder Geflecht aus schnittfesten Fasern bzw. Fäden, insbesondere einem Federstahl oder dgl., wie sie bereits anhand der vorstehenden Ausführungsbeispiele erläutert wurde.

Das Verkleidungselement 10 ist weiters im Bereich der schnittfesten Schutzschichte 14 über die Kleberschichte 18 mit einer Sperrschichte 64 verbunden, welche z.B. aus einer dünnen Aluminiumfolie bzw. einem folienartigen Material, z.B. als nichtrostende oder verzinkte Blechfolie, bzw. als Gewebe, Gewirke, Vlies, welche derart ausgebildet sind, daß sie nicht brennbar bzw. temperaturbeständig sowie flüssigkeitsdicht sind, gebildet ist. Es sind aber auch Werkstoffe aus Kunststoff, wie z.B. Teflon möglich. Bei der Auswahl der Sperrschichte 64 ist auch weiters darauf zu achten, daß diese eine gewisse Elastizität aufweist, um den Sitzpolster 4 nicht übermäßig zu versteifen und die sich gegebenenfalls zusätzlich unter der Sitzbelastung verformt.

Die Sperrschichte 64 ist über eine weitere Kleberschichte 25, welche jedoch nicht zwingend vorgesehen sein muß, mit der Zwischenschichte 13 aus dem Schaumstoff 15 und den darin eingebetteten Füllstoffen 16, 17 verbunden. Die Sperrfolie 21, welche im Bereich der von der Sitzfläche 28 abgewendeten Seite der Zwischenschichte 13 angeordnet ist, ist über eine Kleberschichte 25 mit der Zwischenschichte 13 verbunden und bildet wiederum die bereits zuvor beschriebene Verbindungsvorrichtung 12 aus. Es ist aber auch selbstverständlich möglich, die anderen Kleberschichten 18 bzw. 36 als Verbindungsvorrichtung 12 aufgrund ihrer Klebeeingenschaften auszubilden.

Wesentlich ist bei der Ausbildung der Sperrschichte 64, daß diese vollständig dicht ausgebildet ist. Dadurch wird einerseits bei einer Brandbelastung von der Sitzfläche 28 her ein Durchdringen der Flammen in Richtung des Tragkörpers 11 aus dem Kunststoffschaum 31 vermieden und andererseits bei einer Brand- bzw. Temperaturbelastung des Sitzpolsters 4 von unten auf den Tragkörper 11 ein Durchtreten bzw. Hochtreten des verflüssigten Kunststoffschaumes 31 durch die schnittfeste Schutzschichte 14 gesichert vermieden. Wäre diese Sperrschichte 64 nicht angeordnet, würde der geschmolzene Kunststoffschaum 31 bis in den Bereich der schnittfesten Schutzschichte 14 aufquellen bzw. durchtreten, und dort, weiters bedingt durch die bereits verschmorten bzw. verbrannten Reste des Bezugstoffes 22 bzw. der Einlageschichte 23, welche eine Art Dochtwirkung erzeugen, in kleinen Flammen verbrennen. Dies ist durch die Anordnung der dichten Sperrschichte 64 vermieden.

An diesem vorbeschriebenen Schichtaufbau des Verkleidungselements 10 bzw. Verbundbauteils 24 ist im Bereich der Sperrfolie 21 das Stützelement 30 mit seiner Auflagefläche 29 angeformt. Das Stützelement 30 ist dabei durch den Kunststoffschaum 31 gebildet und bewirkt aufgrund der ihm innewohnenden Haftkraft eine intensive und dauerhafte, feste Verbindung zwischen dem Stützelement 30 und der Sperrfolie 21. Die Sperrfolie 21 ermöglicht hierbei eine Luftdichtheit des Verkleidungselements 10, sodaß dieses in einer Schäumform spielfrei an die Formflächen angelegt werden kann und verhindert gleichzeitig, daß der üblicherweise in flüssiger Form eingebrachte Kunststoffschaum 31 in die Zwischenschichte 13 eindringt, wodurch die Elastizität und das Rückstellvermögen dieser Zwischenschichte 13 durch den Kunststoffschaum nicht nachteilig verändert werden kann.

Weiters ist gezeigt, daß gegebenenfalls zusätzlich auf der der Auflagefläche 29 des Stützelements 30 gegenüberliegenden Oberfläche ein Verstärkungsgewebe 35 in Form eines Netzes, Gitters, Gewirkes oder Vlieses aus hochbeanspruchbaren Fäden oder Fasern wie beispielsweise aus Graphit, Keramik, Glas oder Metall angeordnet sein kann.

In der Fig. 11 ist eine vereinfachte Ausführungsform gegenüber der in Fig. 10 gezeigten Ausführungsform des Sitzpolsters 4 dargestellt.

Das Verkleidungselement 10 bzw. der Verbundbauteil 24 ist wiederum aus dem Bezugsstoff 22, der damit verbundenen Einlageschichte 23 und der über die Kleberschichte 36 verbundenen schnittfesten Schutzschichte 14 gebildet. An der vom Bezugsstoff 22 abgewandten Seite der schnittfesten Schutzschichte 14 ist über die Kleberschichte 25 die Sperrschichte 64 verbunden. Somit bildet die Klebeschichte 25 wiederum die bereits zuvor beschriebene Verbindungsvorrichtung 12 aus. Die Sperrschichte 64 dient einerseits wiederum dazu, um das Stützelement 30, bestehend aus dem Kunststoffschaum 31, an dem Verbundbauteil 24 bzw. dem Verkleidungselement 10 anformen zu können, ohne daß der flüssige Kunststoffschaum 31 in die schnittfeste Schutzschichte 14 bzw. die Einlageschichte 23 oder den Bezugstoff 22 während der Herstellung eintritt. Dadurch erreicht man wieder eine durch den Kunststoffschaum 31 des Stützelements 30 gebildete Haftkraft zwischen der Sperrschichte 64 und dem Stützelement 30, wodurch eine intensive und dauerhafte feste Verbindung erreicht wird. Weiters ermöglicht die Sperrschichte 64 eine Luftdichtheit des Verkleidungselements 10 sodaß dieses in einer Schäumform spielfrei an die Formflächen angelegt werden kann.

Weiters ist im Bereich der Sperrschichte 64 schematisch durch strichlierte Linien angedeutet, daß auch auf der von der Sitzfläche 28 abgewandten Seite von dieser eine weitere Kleberschichte 25 zur nachträglichen Verbindung bzw. zur besseren Anhaftung des Kunststoffschaumes 31 wahlweise, aber nicht zwingend vorgesehen sein kann. Dabei kann es sich aber auch um einen Aktivator bzw. Primer handeln, welcher z.B. ein- bzw. beidseitig auf der Oberfläche der Sperrschichte 64 aufgebracht ist.

Der das Stützelement 30 bildende Tragkörper 11 ist aus dem Kunststoffschaum 31 hergestellt und kann auf der vom Verkleidungselement 10 abgewendeten Seite mit einer in strichlierten Linien angedeuteten Abdeckschichte 34 z.B. aus einem Silikonkautschukschaum bzw. einer Recyclingkunststoffmatte ähnlich der Zwischenschichte 13 versehen sein. Diese verhindert eine Abnutzung der von der Sitzfläche 28 abgewendeten Seite des Tragkörpers 11 bei seiner Auflage am Traggestell 2, sodaß die Schaumstruktur des Tragkörpers 11 nicht nach außenhin austreten kann, wodurch auch die flamm- bzw. brandhemmenden Eigenschaften des Sitzpolsters 4 verbessert werden können. Weiters ist an der vom Verkleidungselement 10 abgewandten Seite des Tragkörpers 11 das Verstärkungsgewebe 35 in Form eines Netzes, Gitters, Gewirkes oder Vlieses aus hochbeanspruchbaren Fäden oder Fasern wie beispielsweise aus Graphit, Keramik, Glas und/oder Metall angeordnet.

Wesentlich ist bei der Ausbildung der Sperrschichte 64, daß diese vollständig dicht ausgebildet ist. Dadurch wird einerseits bei einer Brandbelastung von der Sitzfläche 28 her ein Durchdringen der Flammen in Richtung des Tragkörpers 11 aus dem Kunststoffschaum 31 vermieden und andererseits bei einer Brand- bzw. Temperaturbelastung des Sitzpolsters 4 von unten auf den Tragkörper 11 ein Durchtreten bzw. Hochtreten des verflüssigten Kunststoffschaumes 31 durch die schnittfeste Schutzschichte 14 gesichert vermieden. Wäre diese Sperrschichte 64 nicht angeordnet, würde der geschmolzene Kunststoffschaum 31 bis in den Bereich der schnittfesten Schutzschichte 14 aufquellen bzw. durchtreten, und dort, weiters bedingt durch die bereits verschmorten bzw. verbrannten Reste des Bezugstoffes 22 bzw. der Einlageschichte 23, welche eine Art Dochtwirkung erzeugen, in kleinen Flammen verbrennen. Dies ist durch die Anordnung der dichten Sperrschichte 64 vermieden.

Somit ist wiederum bei den zuvor beschriebenen Ausführungsformen einerseits ein Sitzpolster 4 geschaffen worden, welcher durch die Einbettung der schnittfesten Schutzschichte 14 in das Verkleidungselement 10 sehr hohen und zerstörerischen Belastungen standhält und andererseits jeglicher Brandbelastung einen hohen Widerstand entgegensetzt. Weiters ist es vorteilhaft, wenn die Einlageschichte 23 aus einem Gewebe, Gewirke. Geflecht oder Gitter oder Netz aus flammfesten, zumindest brandhemmenden und/oder schwer entflammbaren, gegebenenfalls hochtemperaturfesten Fäden oder Fasern aus Metallen, Keramik, Kohle oder Glas, Natur- oder Kunststoffmaterialien, z.B. preoxidiertem Polyacrylnitril, Aramid, Polyaramid und/oder Polyamid und/oder Polyimid oder sonstigen thermisch stabilisierten Fasern bzw. Fäden besteht. In der Einlageschichte 23 können auch Fasern oder Fäden aus den verschiedenen genannten Materialien beliebig gemischt oder übereinander angeordnet sein. Die Einlageschichte 23 kann, wenn dies als notwendig oder vorteilhaft erachtet wird, mit einem Flammschutzmittel getränkt bzw. versetzt oder beschichtet sein, sodaß die Einlageschichte 23 als zusätzlicher Feuerblocker wirkt. Weiters ist es auch möglich, die Einlageschichte 23 aus einem Schaumkunststoff, insbesondere Weichschaum, welcher bevorzugt einen hohen Anteil an offenen Zellen aufweist, zu bilden. Durch die Verwendung der derart ausgebildeten und flammfest gemachten Einlageschicht 23 als Feuerblocker wird verhindert, daß beispielsweise beim Anzünden eines Feuers in einem Einenbahnwaggon durch Vandalen oder dgl. auf der Sitzfläche das Feuer tiefer in den Stizpolster eindringt und vor allem verhindert, daß der Tragkörper 11 aus Schaumkunststoff Feuer fangt und zu einer starken Verqualmung des Waggons, beispielsweise eines S- oder U-Bahnwaggons in einem Tunnel und dgl. führt.

Ist der Sitzpolster 4 trotzdem einer Flammbelastung bzw. einer Temperaturbelastung ausgesetzt, so verhindert die zusätzlich eingebrachte Sperrschichte 64, welche aus einer dünnen Aluminiumfolie oder einer dünnen nichtrostenden Metallfolie gebildet sein kann, daß der Kunststoffschaum des Tragkörpers in Richtung der Sitzfläche 28 durchdringt und dort in Form von Flammen verbrennt. Dies wird gesichert durch die dichte Sperrschichte 64 erreicht.

Ist die Sperrschichte 64, wie bereits vorher erwähnt, aus einem folienartigen Material, z.B. einer dünnen Aluminiumfolie oder einem dünnen Aluminiumblech oder den zuvor genannten anderen Materalien hergestellt, kann die Dicke derartiger Folien zwischen 20 und 60 µ, bevorzugt 40 µ, betragen. Es sind aber auch jedwede andere Dicken bei der Verwendung von Folien bis zu einer Dicke von 0,2 mm bzw. von Blechen mit einer Dicke zwischen 0,2 und 1 mm möglich.

Bei der Herstellung derartiger Sitzpolster 4 kann in bevorzugter Weise der Bezugsstoff 22 über eine Kleberschichte 25 mit der Einlageschichte 23 verbunden und diese wiederum über eine Kleberschichte 36 mit der Schutzschichte 14 verbunden sein.

Die Trennebene zum Ablösen verbrauchter, zerstörter oder stark verschmutzter Teile des Sitzpolsters 4 kann dabei in dieser Kleberschichte 25 zwischen der Schutzschichte 14 und der Einlageschichte 23 liegen.

Die Schutzschichte 14 ist dann über eine Kleberschichte 25 direkt mit der Sperrschichte 64 verbunden, die gemäß den vorstehenden Ausführungen ausgebildet sein kann.

Der Tragkörper 11 kann direkt an die Sperrschichte 64 durch einen Anformvorgang aufgeschäumt bzw. mit diesem verbunden sein. Es ist jedoch auch möglich, den Tragkörper 11 aus z.B. unterschiedlichen Platten herzustellen oder aus einem vorgefertigten Formteil auszuschneiden und über eine Kleberschichte 25 mit der Sperrschichte 64 zu verbinden.

Bei der Herstellung des Verbundelementes zwischen der Sperrschichte 64, der Schutzschichte 14 und der Einlageschichte 23 kann z.B. derart vorgegangen werden, daß auf ein Transportband die Sperrschichte 64 z.B. eine Aluminiumfolie, die von einer Rolle abgezogen werden kann, zugeführt, wird, auf die die Schutzschichte 14 z.B. ein Metallgitter ebenfalls von der Rolle oder von einer Bahn zugeführt und auf die Sperrschichte 64 aufgelegt wird, worauf z.B. flüssiger oder pulverförmiger Kleber aufgebracht wird. der daran anschließend z.B. durch Infrarotlicht oder UV-Licht oder einen Heizstrahler aktiviert wird, sodaß er in die Flüssigphase übertritt. Daraufhin wird die Einlageschichte 23 z.B. ein Schaumkunststoff oder ein Vlies von der Rolle oder der Platte zugeführt und auf das vorgefertigte Halbfertigteil aufgebracht und z.B. durch Preßrollen oder Druckstempeln auf dieses aufgepreßt und zumindest solange gehalten wird, bis der Kleber eine ausreichende Festigkeit zur Verbindung der Sperrschichte 64 mit der Schutzschichte 14 und der Einlageschichte 23 bewirkt.

Dieses vorgefertigte Halbfertigprodukt kann dann zur Weiterverarbeitung in der Schäummaschine bzw. zum Aufbringen des Tragkörpers und des Bezugsstoffes weitergeleitet werden. Selbstverständlich ist es auch möglich, im Zuge dieses Herstellungsverfahrens auch den Bezugsstoff in der Folge z.B. von der Rolle oder der Matte auf die Einlageschichte 23 unter Verwendung einer Kleberschichte 25 aufzubringen.

Der Ordnung halber sei abschließend noch darauf hingewiesen, daß zum besseren Verständnis des Schichtaufbaus der einzelnen Sitzpolster 4 und auch der Funktion der Form 45 einzelne Teile und Schichten unproportional, maßstäblich verzerrt und in unterschiedlichen Dicken dargestellt sind.

### Bezugszeichenaufstellung

1 Sitz
2 Traggestell
3 Polsterung
4 Sitzpolster
5 Rückenpolster
6 Kopfpolster
7 Armlehne
8 Seitenwand
9 Rohr
10 Verkleidungselement
11 Tragkörper
12 Verbindungsvorrichtung
13 Zwischenschichte
14 Schutzschichte
15 Schaumstoff
16 Füllstoff
17 Füllstoff
18 Kleberschichte
19 Platte
20 Schutzschichte
21 Sperrfolie
22 Bezugsstoff
23 Einlageschichte
24 Verbundbauteil
25 Kleberschichte
26 Gitter
27 Maschenweite
28 Sitzfläche
29 Auflagefläche
30 Stützelement
31 Kunststoffschaum
32 Schnittrand
33 Schnitt
34 Abdeckschichte
35 Verstärkungsgewebe
36 Kleberschichte
37 Oberfläche
38 Stirnkante
39 Abstand
40 Kleberschichte
41 Folie
42 Auflagefläche
43 Vorrichtung
44 Traggestell
45 Form
46 Formoberteil
47 Formunterteil
48 Formhohlraum
49 Aufspannplatte
50 Aufspannplatte
51 Führungssäule
52 Verstellantrieb
53 Auflagefläche
54 Vakuumöffnung
55 Vakuumpumpe
56 Stempel
57 Stempel
58 Führungssäule
59 Rohr
60 Magnet
61 Einspritzöffnung
62 Stirnkante
63 Vorsprung
64 Sperrschichte

## Patentansprüche

1. Sitz, insbesondere Sitzpolster (4) für öffentliche Verkehrsmittel mit einem Sitzpolster (4), der in einem Traggestell (2) gehaltert ist und aus einem Tragkörper (11) aus Kunststoffschaum (31), insbesondere Formkaltschaum, einer schnitthemmenden Schutzschichte (14) und einem Verkleidungselement (10) aus einem Bezugsstoff (22) gebildet ist, dadurch gekennzeichnet, daß eine eine Verbindungsvorrichtung (12) bildende Kleberschichte (18, 25, 36) auf einer dem Tragkörper (11) zugewandten Oberfläche einer Einlageschichte (23) aufgebracht ist und über diese mit der schnitthemmenden Schutzschichte (14) verbunden ist und daß der Tragkörper (11) aus Kunststoffschaum (31) an einer über eine weitere Kleberschichte (25) auf einer vom Bezugsstoff (22) abgewendeten Oberfläche einer mit der Schutzschichte (14) verbundenen Zwischenschichte (13) befestigten flüssigkeitsdichten Sperrfolie (21) über einen Anformvorgang (25) oder eine zusätzliche Kleberschichte (25) befestigt ist.

2. Sitz, insbesondere Sitzpolster (4) für öffentliche Verkehrsmittel mit einem Sitzpolster (4), der in einem Traggestell (2) gehaltert ist und aus einem Tragkörper (11) aus Kunststoffschaum (31), insbesondere Formkaltschaum, einer schnitthemmenden Schutzschichte (14) und einem Verkleidungselement (10) aus einem Bezugsstoff (22) gebildet ist, dadurch gekennzeichnet, daß eine eine Verbindungsvorrichtung (12) bildende Kleberschichte (18, 25, 36) auf einer dem Tragkörper (11) zugewandten Oberfläche einer Einlageschichte (23) aufgebracht ist und über diese mit der schnitthemmenden Schutzschichte (14) verbunden ist und daß der Tragkörper (11) aus Kunststoffschaum (31) an einer über eine Weitere Kleberschichte (25) auf einer vom Bezugsstoff (22) abgewendeten Oberfläche einer Zwischenschichte (13) oder der Schutzschichte (14) befestigten, flüssigkeitsdichten, nicht brennbaren bzw. temperaturbeständigen Sperrschichte (64) über einen Anformvorgang (25) oder eine zusätzliche Kleberschichte (25) befestigt ist.

3. Sitz nach Anspruch 1 oder 2, dadurch gekennzeichnet, daß die Einlage- und die Schutzschichte (23, 14) über die Kleberschichte (18) auf der Zwischenschichte (13) befestigt sind.

4. Sitz nach einem oder mehreren der Ansprüche 1 bis 3, dadurch gekennzeichnet, daß die schnitthemmende Schutzschichte (14) in einer dem Verkleidungselement (10) zugewandten Oberfläche des Kunststoffschaums (31) des Tragkörpers (11) eingebettet ist.

5. Sitz nach einem oder mehreren der Ansprüche 1 bis 4, dadurch gekennzeichnet, daß das Verkleidungselement (10) über die als Verbindungsvorrichtung (12) wirkende Kleberschichte (18, 25, 36) mit der Auflagefläche (29) und/oder der Schutzschichte (14) des Tragkörpers (11) verbunden ist.

6. Sitz nach einem oder mehreren der Ansprüche 1 bis 5, dadurch gekennzeichnet, daß die Einlageschichte (23) aus gewebeartig verbundenen Fasern oder Fäden besteht, die flammhemmend und/oder feuerbeständig ausgebildet sind.

7. Sitz nach einem oder mehreren der Ansprüche 1 bis 5, dadurch gekennzeichnet, daß die Einlageschichte (23) aus einem Schaumkunststoff, insbesondere Weichschaum, welcher bevorzugt einen hohen Anteil an offenen Zellen aufweist, gebildet ist.

8. Sitz nach einem oder mehreren der Ansprüche 2 bis 7, dadurch gekennzeichnet, daß die Sperrschichte (64) durch eine dünne Aluminiumfolie und/oder einem folienartigen Material, insbesondere durch eine nichtrostende und/oder verzinkte Blechfolie und/oder durch ein Gewebe, Gewirke bzw. Vlies gebildet ist.

9. Sitz nach einem oder mehreren der Ansprüche 1 bis 8, dadurch gekennzeichnet, daß der Bezugsstoff (22) über eine Kleberschichte mit einer Einlageschichte (23) und/oder einer Zwischenschichte (13) aus einem Kunststoffschaum mit darin eingeschäumten Füllstoffen (16, 17) aus Recyclingkunststoffen und gegebenenfalls Füllmaterialien verbunden ist.

10. Sitz nach einem oder mehreren der Ansprüche 1 bis 9, dadurch gekennzeichnet, daß eine Haftkraft bzw. eine Haltekraft, der durch die Kleberschichte (18, 25, 36) und/oder die durch den an der Schutzschichte (14) angeformten Kunststoffschaum gebildeten Verbindungsvorrichtung (12) zwischen 100 N/5 cm und 140 N/5 cm, bevorzugt zwischen 110 N/5 cm und 125 N/5 cm, beträgt.

11. Sitz nach einem oder mehreren der Ansprüche 1 bis 10, dadurch gekennzeichnet, daß eine Halte- bzw. Haftkraft der schnitthemmenden Schutzschichte (14) im aus Kunststoffschaum (31) bestehenden Stützelement (30) größer ist als 125 N/5 cm.

12. Sitz nach einem oder mehreren der Ansprüche 1 bis 11, dadurch gekennzeichnet, daß eine Trennkraft der Verbindungsvorrichtung (12) bzw. der Kleberschichte (18, 36) zwischen der Auflagefläche (29) des Tragkörpers (11) bzw. der schnitthemmenden Schutzschichte (14) und der Einlageschichte (23) zwischen 100 N/5 cm und 140 N/5 cm, bevorzugt zwischen 110 N/5 cm und 125 N/5 cm, beträgt.

13. Sitz nach einem oder mehreren der Ansprüche 1 bis 12, dadurch gekennzeichnet, daß eine Reißkraft des Bezugsstoffes (22) und/oder der Einlageschichte (23) bzw. zwischen diesen Schichten zwischen 110 N/5 cm bis 125 N/5 cm beträgt oder größer ist.

14. Sitz nach einem oder mehreren der Ansprüche 1 bis 13, dadurch gekennzeichnet, daß eine Reißkraft der Zwischenschichte (13) und/oder der Sperrfolie (21) zwischen 100 N/5 cm und 130 N/5 cm oder größer ist.

15. Sitz nach einem oder mehreren der Ansprüche 1 bis 14, dadurch gekennzeichnet, daß die Zwischenschichte (13) und/oder das Stützelemente (30) und/oder die Abdeckschichte (34) durch einen aus Primärmaterial hergestellten Kunststoffschaum mit darin eingeschäumten Füllstoffen (16, 17) aus Recyclingkunststoffen und gegebenenfalls Füllmaterialien besteht und ein Freischaumgewicht der Zwischenschichte (13) zwischen 60 kg/m³ bis 150 kg/m³, bevorzugt 100 kg/m³, beträgt.

16. Sitz nach einem oder mehreren der Ansprüche 1 bis 15, dadurch gekennzeichnet, daß die Füllstoffe (16, 17) aus Recyclingkunststoffen bestehen, die durch Schaumstoffgranulat aus hartem und/oder mittelhartem und/oder weichem Schaumkunststoff oder aus Recyclingkunststoffen durch thermoplastische Kunststoffabfälle mit einer Korngröße von 2 mm bis 20 mm, gegebenenfalls mit Deckschichten aus Kunst- oder Naturmaterialien gebildet sind.

17. Sitz nach einem oder mehreren der Ansprüche 1 bis 16 dadurch gekennzeichnet, daß die Einlageschichte (23) durch ein Netz, Geflecht, Gewirke oder Gitter aus Fasern bzw. Fäden aus preoxidiertem Polyacrylnitril und/oder aus Polyaramid und/oder Polyamid und/oder Polyimid besteht.

18. Sitz nach einem oder mehreren der Ansprüche 1 bis 17, dadurch gekennzeichnet, daß die Zwischenschichte (13) und/oder die Abdeckschichte (34) thermisch auf ein Raumgewicht zwischen 200 kg/m³ und 400 kg/m³, bevorzugt 300 kg/m³, verdichtet ist.

19. Sitz nach einem oder mehreren der Ansprüche 1 bis 18, dadurch gekennzeichnet, daß der Zwischenschichte (13) ein Flammschutzmittel, insbesondere Melaminharz und/oder Aluminiumhydroxyd und/oder Amonpolyphosphat zugesetzt ist.

20. Sitz nach einem oder mehreren der Ansprüche 1 bis 19, dadurch gekennzeichnet, daß die schnitthemmende Schutzschichte (14) ein Netz bzw. ein Gitter mit einer Maschenweite zwischen 2 mm und 10 mm, bevorzugt 5 mm, ist.

21. Sitz nach einem oder mehreren der Ansprüche 1 bis 20, dadurch gekennzeichnet, daß die Schutzschichte (14) aus Federstahl besteht.

22. Sitz nach einem oder mehreren der Ansprüche 1 bis 21, dadurch gekennzeichnet, daß die Schutzschichte (14), insbesondere das Gitter oder Netz oder Geflecht oder Gewirke räumlich plastisch verformt ist.

23. Sitz nach einem oder mehreren der Ansprüche 1 bis 22, dadurch gekennzeichnet, daß die Schutzschichte (14) rückfedernd ausgebildet ist.

24. Sitz nach einem oder mehreren der Ansprüche 1 bis 23, dadurch gekennzeichnet, daß auf der von der Verbindungsvorrichtung (12) abgewendeten Seite des Tragkörpers (11) eine Abdeckschichte (34) angeordnet ist, die bevorzugt durch einen Bezugsstoff (22), gegebenenfalls mit Gewebeverstärkung oder aus einem Kunststoffschaum mit darin eingeschäumten Füllstoffen (16,17) aus Recyclingkunststoffen und gegebenenfalls mit Füllmaterialien besteht.

25. Sitz nach einem oder mehreren der Ansprüche 1 bis 24, dadurch gekennzeichnet, daß die Verbindungsvorrichtung (12) zwischen dem Bezugsstoff (22) oder der von der Sitzfläche (28) des Bezugsstoffes (22) abgewendeten Einlageschichte (23) und der in das Stützelement (30) eingeschäumten, schnittfesten Schutzschichte (14) angeordnet ist und vorzugsweise auf der von der schnittfesten Schutzschichte (14) abgewendeten Seite des Stützelementes (30) eine Abdeckschichte (34) angeordnet ist.

26. Sitz nach einem oder mehreren der Ansprüche 1 bis 25, dadurch gekennzeichnet, daß eine dem Verkleidungselement (10) zugewandte Schichte des Tragkörpers (11) durch die schnitthemmende Schutzschichte (14) gebildet ist und zwischen dieser und dem Stützelement (30) die Zwischenschichte (13) und die flüssigkeitsdichte Sperrfolie (21) angeordnet ist, wobei an der flüssigkeitsdichten Sperrfolie (21) das Stützelement (30) durch einen Anformvorgang befestigt ist und die Verbindungsvorrichtung (12) zwischen der schnittfesten Schutzschichte (14) und der von der Sitzfläche des Bezugsstoffes (22) abgewendeten Seite der Einlageschichte (23) angeordnet ist.

27. Sitz nach einem oder mehreren der Ansprüche 1 bis 26, dadurch gekennzeichnet, daß die Schutzschichte (14) auf der vom Stützelement (30) abgewendeten Seite mit einer zumindest flüssigkeitsdichten Folie (41) verbunden ist.

28. Sitz nach einem oder mehreren der Ansprüche 1 bis 27, dadurch gekennzeichnet, daß die Sperrfolie (21) oder die Folie (41) eine Selbstklebefolie aus Polyäthylen oder Polypropylen, also PE- bzw. PP-Folie, gebildet ist.

29. Sitz nach einem oder mehreren der Ansprüche 1 bis 28, dadurch gekennzeichnet, daß die Folie (41) auf der der schnittfesten Schutzschichte (14) zugewandten Seite mit einer Selbstklebebeschichtung versehen ist.

30. Sitz nach einem oder mehreren der Ansprüche 1 bis 29, dadurch gekennzeichnet, daß eine Dampfdiffusionswiderstandszahl der flüssigkeitsdichten Sperrfolie (21) geringer ist als 100.000, bevorzugt geringer als 60.000.

31. Sitz nach einem oder mehreren der Ansprüche 1 bis 30, dadurch gekennzeichnet, daß der Kleber der Verbindungsvorrichtung (12) eine maximale Haftkraft von zwischen 100 und 140 N/5 cm bevorzugt 110 bis 125 N/5 cm aufweist.

32. Verfahren zur Herstellung eines Sitzpolsters (4) für einen Sitz (1), insbesondere in öffentlichen Verkehrsmitteln, bei dem ein Verbundbauteil (24), bestehend aus einem Bezugsstoff (22) und einer Einlageschichte (23) mit einer von dieser abgewendeten Oberfläche auf eine Formfläche einer Form (45) aufgelegt, in der Form (45) positioniert und gehalten wird, worauf ein flüssiges Kunststoffmaterial zur Herstellung des Tragkörpers (11) in den Formhohlraum (48) eingebracht und der Tragkörper (11) hergestellt wird, insbesondere nach einem oder mehreren der Ansprüche 1 bis 31, dadurch gekennzeichnet, daß die Einlageschichte (23) des Verbundbauteils (24) mit einer Zwischenschichte (13) aus einem mit Füllmaterialien und/oder Füllstoffen (16,17), insbesondere aus mit Recyclingkunststoffen gefülltem Kunststoffschaum über eine Kleberschichte (18, 25) verbunden wird, in die die schnitthemmende Schutzschichte (14) eingebettet wird und danach auf die von der Einlageschichte (23) abgewendete Oberfläche eine flüssigkeitsundurchlässige Sperrfolie (21) aufgeklebt wird und daß nach dem Einlegen des Verbundbauteils (24) mit der Schutzschichte (14) und der Sperrfolie (21) und dem Verschließen des Formhohlraumes (48) ein flüssiger Kunststoffschaum (31) zur Herstellung des Stützelementes (30) auf die flüssigkeitsdichte Sperrfolie (21) aufgebracht und nach dem Ausreagieren des Kunststoffschaumes (31) der Sitzpolster (4) aus dem Formhohlraum (48) entnommen wird.

33. Verfahren zur Herstellung eines Sitzpolsters (4) für einen Sitz (1), insbesondere in öffentlichen Verkehrsmitteln, bei dem ein Verbundbauteil (24), bestehend aus einem Bezugsstoff (22) und einer Einlageschichte (23) mit einer von dieser abgewendeten Oberfläche auf eine Formfläche einer Form (45) aufgelegt, in der Form (45) positioniert und gehalten wird, worauf ein flüssiges Kunststoffmaterial zur Herstellung des Tragkörpers (11) in den Formhohlraum (48) eingebracht und der Tragkörper (11) hergestellt wird, insbesondere nach einem oder mehreren der Ansprüche 1 bis 32, dadurch gekennzeichnet, daß auf die schnitthemmende Schutzschichte (14) eine feuchtigkeitsundurchlässige Folie (41) aufgebracht wird und die schnitthemmende Schutzschichte (14) gemeinsam mit dieser flüssigkeitsdichten Folie (41) räumlich verformt und in eine Form (45) eingelegt und danach mittels Vakuums positioniert gehalten wird, worauf auf jene Oberfläche der flüssigkeitsdichten Folie, die der schnitthemmenden Schutzschichte (14) zugewandt ist, das flüssige Rohmaterial für den Kunststoffschaum (31) des Stützelementes (30) aufgebracht und dieser im Zuge des Schäumvorgangs an der flüssigkeitsdichten Folie (41) unter Einbettung der schnitthemmenden Schutzschichte (14) angeformt wird, worauf die flüssigkeitsdichte Folie (41) nach Verfestigung des Stützelementes (30) abgezogen wird und ein gegebenenfalls vorgeformter Verbundbauteil (24) über eine Kleberschichte (36,40) mit der Einlageschichte (23) oder dem Bezugsstoff (22) verbunden wird.

34. Verfahren nach Anspruch 32, dadurch gekennzeichnet, daß die Einlageschichte (23), die Zwischenschichte (13) und die schnitthemmende Schutzschichte (14) ebenflächig zu einem Bauteil verbunden werden, der darauf grob zugeschnitten und auf die Einlageschichte (23) der Bezugsstoff (22) und auf die Zwischenschichte (13) die Folie (41) aufgebracht und danach der Verbundbauteil (24) geprägt und gegebenenfalls beschnitten, sowie räumlich verformt wird, und danach in der gleichen Form (45) oder nach dem Einlegen in eine Form (45) das Stützelementes (30) durch Aufbringen des flüssigen Materials des Kunststoffschaums (31) in der Form (45) hergestellt und gleichzeitig mit dem Bauteil formschlüssig verbunden wird.

## Claims

1. Seat, in particular seat padding (4) for public means of transport, comprising a seat padding (4) which is held in a support frame (2) and consists of a supporting body (11) of plastic foam (31), in particular moulded cold-curing foam, a cut-resistant protective layer (14) and a lining element (10) made of an upholstery material (22), characterized in that an adhesive layer (18, 25, 36) forming a connecting means (12) is applied to a surface of an inserted layer (23) facing the supporting body (11) and is joined thereby to the cut-resistant protective layer (14) and the supporting body (11) of plastic foam (31) is secured by means of a moulding process (25) or an additional adhesive layer (25) to a liquid-proof barrier film (21) which is attached by means of an additional adhesive layer (25) to a surface of an intermediate layer (13) joined to the protective layer (14) facing away from the upholstery material (22).

2. Seat, in particular seat padding (4) for public means of transport, comprising a seat padding (4) which is held in a support frame (2) and consists of a supporting body (11) of plastic foam (31), in particular cold-curing foam, a cut-resistant protective layer (14) and a lining element (10) made of an upholstery material (22), characterized in that an adhesive layer (18, 25, 36) forming a connecting means (12) is applied to the surface of an inserted layer (23) facing the supporting body (11) and is joined thereby to the cut-resistant protective layer (14) and that the supporting body (11) of plastic foam (31) is secured by means of a moulding process (25) or an additional adhesive layer (25) to a liquid-proof, non-flammable or temperature-resistant barrier layer (64) which is attached by means of an additional adhesive layer (25) to a surface of an intermediate layer (13) or the protective layer (14) facing away from the upholstery material (22).

3. Seat according to Claim 1 or 2, characterized in that the inserted and the protective layer (23, 14) are attached to the intermediate layer (13) by means of the adhesive layer (18).

4. Seat according to one or more of Claims 1 to 3, characterized in that the cut-resistant protective layer (14) is embedded in a surface of the plastic foam (31) of the supporting body (11), facing towards the lining element (10).

5. Seat according to one or more of Claims 1 to 4, characterized in that the lining element (10) is connected to the bearing face (29) and/or the protective layer (14) of the supporting body (11) by means of the adhesive layer (18, 25, 36) acting as connecting means (12).

6. Seat according to one or more of Claims 1 to 5, characterized in that the inserted layer (23) consists of fibres or threads bound together like a fabric and constructed so as to be fire-inhibiting and/or fire-resistant.

7. Seat according to one or more of Claims 1 to 5, characterized in that the inserted layer (23) is made of a foamed plastic, in particular high resilient foam which preferably has a high portion of open cells.

8. Seat according to one or more of Claims 2 to 7, characterized in that the barrier layer (64) is formed by a thin aluminium film and/or a film-like material, in particular by a stainless and/or galvanized sheet-metal film and/or by a fabric, knitted fabric or non-woven fabric.

9. Seat according to one or more of Claims 1 to 8, characterized in that the upholstery material (22) is connected by means of an adhesive layer to an inserted layer (23) and/or an intermediate layer (13) of a plastic foam, into which fillers (16, 17) of recycled plastic materials and, if required, filler material, are embedded by foaming.

10. Seat according to one or more of Claims 1 to 9, characterized in that the connecting means (12), which is formed by the adhesive layer (18, 25, 36) and/or the plastic foam formed onto the protective layer (14), has an adhesive strength or a retaining force of between 100 N/5 cm and 140 N/5 cm, preferably between 110 N/5 cm and 125 N/5 cm.

11. Seat according to one or more of Claims 1 to 10, characterized in that a retaining force or adhesive strength of the cut-resistant protective layer (14) in the supporting element (30) which consists of plastic foam (31) is greater than 125 N/5 cm.

12. Seat according to one or more of Claims 1 to 11, characterized in that the connecting means (12) or the adhesive layer (18, 36) between the bearing face (29) of the supporting body (11) or the cut-resistant protective layer (14) and the inserted layer (23) has a separating strength of between 100 N/5 cm and 140 N/5 cm, preferably between 110 N/5 cm and 125 N/5 cm.

13. Seat according to one or more of Claims 1 to 12, characterized in that the tearing resistance of the upholstery material (22) and/or the inserted layer (23) or between these layers is between 110 N/5 cm to 125 N/5 cm or greater.

14. Seat according to one or more of Claims 1 to 13, characterized in that the tearing resistance of the intermediate layer (13) and/or the barrier film (21) is between 100 N/5 cm and 130 N/5 cm or greater.

15. Seat according to one or more of Claims 1 to 14, characterized in that the intermediate layer (13) and/or the supporting element (30) and/or the covering layer (34) consists of a plastic foam produced from primary material and into which fillers (16, 17) of recycled plastic materials and, if required, filling materials are embedded by foaming, and the intermediate layer (13) has a free-rising foam density of between 60 kg/m³ to 150 kg/m ³, preferably 100 kg/m³.

16. Seat according to one or more of Claims 1 to 15, characterized in that the fillers (16, 17) consist of recycled plastic materials which are formed by foamed material granulates made of rigid and/or medium hard and/or high-resilient foamed plastic or of recycled plastic materials formed by thermoplastic synthetic scrap with a grain size of 2 mm to 20 mm, if required comprising facing layers of natural or synthetic materials.

17. Seat according to one or more of Claims 1 to 16, characterized in that the inserted layer (23) consists of a net, woven fabric, knitted fabric or lattice made of fibres or threads of preoxidized polyacrylonitrile and/or polyaramide and/or polyamide and/or polyimide.

18. Seat according to one or more of Claims 1 to 17, characterized in that the intermediate layer (13) and/or the covering layer (34) is compressed to a specific gravity between 200 kg/m³ and 400 kg/m ³, preferably 300 kg/m³.

19. Seat according to one or more of Claims 1 to 18, characterized in that a flame retardant, in particular melamine resin and/or aluminium hydroxide and/or ammonium polyphosphate, are added to the intermediate layer (13).

20. Seat according to one or more of Claims 1 to 19, characterized in that the cut-resistant protective layer (14) is a net or a lattice having a mesh width of between 2 mm and 10 mm, preferably 5 mm.

21. Seat according to one or more of Claims 1 to 20, characterized in that the protective layer (14) is made of spring steel.

22. Seat according to one or more of Claims 1 to 21, characterized in that the protective layer (14), in particular the lattice or net or woven fabric or knitted fabric, is spatially deformed plastically.

23. Seat according to one or more of Claims 1 to 22, characterized in that the protective layer (14) is constructed so as to have resilience.

24. Seat according to one or more of Claims 1 to 23, characterized in that on the side of the supporting body (11) facing away from the connecting means (12), a covering layer (34) is arranged, which preferably consists of an upholstery material (22), if required with fabric reinforcement or of a plastic foam, into which fillers (16, 17) of recycled plastic materials, if required with filling materials, are embedded by foaming.

25. Seat according to one or more of Claims 1 to 24, characterized in that the connecting means (12) is arranged between the upholstery material (22) or the inserted layer (23) facing away from the seat surface (28) of the upholstery material (22) and the cut-resistant protective layer (14) which is embedded by foaming in the supporting element (30), and a covering layer (34) is arranged preferably on the side of the supporting element (30) facing away from the cut-resistant protective layer (14).

26. Seat according to one or more of Claims 1 to 25, characterized in that one layer of the supporting body (11) facing towards the lining element (10) is formed by the cut-resistant protective layer (14), and between the latter and the supporting element (30) there is arranged the intermediate layer (13) and the liquid-proof barrier film (21), the supporting element (30) being secured to the liquid-proof barrier film (21) by a moulding process and the connecting means (12) being arranged between the cut-resistant protective layer (14) and the side of the inserted layer (23) facing away from the seat surface of the upholstery material (22).

27. Seat according to one or more of Claims 1 to 26, characterized in that the protective layer (14) is connected to a film (41) which is at least liquid-proof, on the side facing away from the supporting element (30).

28. Seat according to one or more of Claims 1 to 27, characterized in that the barrier film (21) or the film (41) consists of a self-adhesive film made of polyethylene or polypropylene, that is a PE- or PP-film.

29. Seat according to one or more of Claims 1 to 28, characterized in that the film (41) on the side facing towards the cut-resistant protective layer (14) is provided with a self-adhesive coating.

30. Seat according to one or more of Claims 1 to 29, characterized in that a vapeur diffusion resistance factor of the liquid-proof barrier film (21) is less than 100.000, preferably less than 60.000.

31. Seat according to one or more of Claims 1 to 30, characterized in that the adhesive of the connecting means (12) has a maximum adhesive strength of between 100 and 140 N/5 cm, preferably 110 to 125 N/5 cm.

32. Method for the production of a seat padding (4) for a seat (1), in particular used in public means of transport, wherein a composite structure (24) consisting of an upholstery material (22) and an inserted layer (23) is put with a surface facing away from the latter onto a moulding surface of a mould (45), is positioned and held in the mould (45), whereupon a liquid plastic material for the production of the supporting body (11) is inserted into the mould cavity (48) and the supporting boldy (11) is produced, in particular according to one or more of Claims 1 to 31, characterized in that the inserted layer (23) of the composite structure (24) is connected to an intermediate layer (13) of a plastic foam which is filled with filling materials and/or fillers (16, 17), in particular of recycled plastic materials, by means of an adhesive layer (18, 25), in which the cut-resistant protective layer (14) is embedded, and then a liquid-proof barrier film (21) is secured by sticking to the surface facing away from the inserted layer (23), and that after inserting the composite structure (24) with the protective layer (14) and the barrier film (21) and closing the mould cavity (48) a liquid plastic foam (31) for producing the supporting element (30) is applied to the liquid-proof barrier film (21) and after allowing the plastic foam (31) to react, the seat padding (4) is taken out of the mould cavity (48).

33. Method for the production of a seat padding (4) for a seat (1), in particular used in public means of transport, wherein a composite structure (24) consisting of an upholstery material (22) and an inserted layer (23) is put with a surface facing away from the latter onto a moulding surface of a mould (45), is positioned and held in the mould (45), whereupon a liquid plastic material for the production of the supporting body (11) is inserted into the mould cavity (48) and the supporting body (11) is produced, in particular according to one or more of Claims 1 to 32, characterized in that a moisture-tight film (41) is applied to the cut-resistant protective layer (14), and the cut-resistant protective layer (14) is spatially deformed together with this liquid-proof film (41) and placed into a mould (45) and thereafter is held in position by means of vacuum, whereupon on that surface of the liquid-proof film which faces the cut-resistant protective layer (14), the liquid raw material for the plastic foam (31) of the supporting element (30) is applied and the latter is formed onto the liquid-proof film (41) in the course of the foaming operation, while embedding the cut-resistant protective layer (14), whereupon the liquid-proof film (41) is peeled off after consolidation of the supporting element (30) and a composite structure (24), preshaped if required, is connected to the inserted layer (23) or the upholstery material (22) by means of an adhesive layer (36, 40).

34. Method according to Claim 32, characterized in that the inserted layer (23), the intermediate layer (13) and the cut-resistant protective layer (14) are joined together to form a component with a plane surface, which thereupon is cut to approximate size, and the upholstery material (22) is applied to the inserted layer (23) and the film (41) is applied to the intermediate layer (13), and thereafter the composite structure (24) is pressed in and, if required, cut to exact size as well as spatially deformed, and thereafter in the same mould (45) or after inserting into a mould (45), the supporting element (30) is produced in the mould (45) by applying the fluid material of the plastic foam (31) and simultaneously is connected to the component in a form-locking manner.

## Revendications

1. Siège, notamment rembourrage de siège (4) pour des moyens de transport publics, avec un rembourrage de siège (4) qui est retenu dans un châssis de support (2) et qui est constitué d'un corps de support (11) en mousse de matière synthétique (31), en particulier de mousse formée à froid, d'une couche de protection (14) résistant aux entailles et d'un élément de revêtement (10) en un tissu de recouvrement (22), caractérisé en ce qu'une couche de colle (18, 25, 36) constituant un dispositif de liaison (12) est appliquée sur une surface d'une couche intercalaire (23) orientée vers le corps de support (11) et est reliée par celle-ci à la couche de protection résistant aux entailles (14) et en ce que le corps de support (11) en mousse de matière synthétique (31) est fixé à une feuille de blocage (21) étanche au liquide, fixée par une couche de colle additionnelle (25) sur une surface éloignée du tissu de recouvrement (22) d'une couche intermédiaire (13) reliée à la couche de protection (14), par une opération de formage (25) ou une couche de colle additionnelle (25).

2. Siège, notamment rembourrage de siège (4) pour des moyens de transport publics avec un rembourrage de siège (4) qui est retenu dans un châssis de support (2) et qui est constitué d'un corps de support (11) en mousse de matière synthétique (31), notamment une mousse formée à froid, d'une couche de protection résistant aux entailles (14) et d'un élément d'habillage (10) en un tissu de recouvrement (22), caractérisé en ce qu'une couche de colle (18, 25, 36) constituant un dispositif de liaison (12) est appliquée sur une surface d'une couche intercalaire (23) orientée vers le corps de support (11) et est reliée par celle-ci à la couche de protection résistant aux entailles (14), et en ce que le corps de support (11) en mousse de matière synthétique (31) est fixé à une couche de blocage (64) non combustible et, respectivement thermiquement constante, fixée par une couche de colle additionnelle (25) sur une surface d'une couche intermédiaire (13) ou de la couche de protection (14) éloignée du tissu de recouvrement (22), par une opération de formage (25) ou une couche de colle additionnelle (25).

3. Siège selon la revendication 1 ou 2, caractérisé en ce que les couches intercalaire et de protection (23, 14) sont fixées par la couche de colle (18) sur la couche intermédiaire (13).

4. Siège selon l'une ou plusieurs des revendications 1 à 3, caractérisé en ce que la couche de protection résistant aux entailles (14) est noyée dans une surface, orientée vers l'élément d'habillage (10), de la mousse de matière synthétique (31) du corps de support (11).

5. Siège selon l'une ou plusieurs des revendications 1 à 4, caractérisé en ce que l'élément d'habillage (10) est relié par la couche de colle (18, 25, 36) agissant comme dispositif de liaison (12) à la surface d'appui (29) et/ou la couche de protection (14) du corps de support (11).

6. Siège selon l'une ou plusieurs des revendications 1 à 5, caractérisé en ce que la couche intercalaire (23) est constituée de fibres ou fils reliés à la manière d'un tissu qui sont ignifuges et/ou qui résistent au feu.

7. Siège selon l'une ou plusieurs des revendications 1 à 5, caractérisé en ce que la couche intercalaire (23) est réalisée en une matière synthétique en mousse notamment en mousse souple, qui présente de préférence une partie élevée d'alvéoles ouverts.

8. Siège selon l'une ou plusieurs des revendications 2 à 7, caractérisé en ce que la couche de blocage (64) est constituée d'une feuille d'aluminium mince et/ou d'un matériau en forme de feuille, notamment d'une feuille de tôle qui ne rouille et/ou qui est galvanisée et/ou par un tissu, tricot ou nappe.

9. Siège selon l'une ou plusieurs des revendications 1 à 8, caractérisé en ce que le tissu de recouvrement (22) est relié par une couche de colle à une couche intercalaire (23) et/ou une couche intermédiaire (13) en une mousse de matière synthétique dans laquelle sont introduites des matières de remplissage (16, 17) en matières synthétiques recyclées et le cas échéant en matériaux de remplissage.

10. Siège selon l'une ou plusieurs des revendications 1 à 9, caractérisé en ce qu'une force d'adhésion et, respectivement une force de retenue du dispositif de liaison (12) formé par la couche de colle (18, 25, 36) et/ou la mousse de matière synthétique rapportée à la couche de protection (14) est comprise entre 100 N/5 cm et 140 N/5 cm, de préférence entre 110 N/5 cm et 125 N/5 cm.

11. Siège selon l'une ou plusieurs des revendications 1 à 10, caractérisé en ce qu'une force de retenue ou d'adhésion de la couche de protection résistant aux entailles (14) dans l'élément d'appui (30) réalisé en mousse de matière synthétique (31) est supérieure à 125 N/5 cm.

12. Siège selon l'une ou plusieurs des revendications 1 à 11, caractérisé en ce qu'une force de séparation du dispositif de liaison (12) et, respectivement de la couche de colle (18, 36) entre la surface d'appui (29) du corps de support (11) et, respectivement de la couche de protection résistant aux entailles (14) et la couche intercalaire (23) est comprise entre 100 N/5 cm et 140 N/5 cm, de préférence entre 110 N/5 cm et 125 N/5 cm.

13. Siège selon l'une ou plusieurs des revendications 1 à 12, caractérisé en ce qu'une résistance à la rupture par traction du tissu de recouvrement (22) et/ou de la couche intercalaire (23) et, respectivement entre ces couches est comprise entre 110 N/5 cm et 125 N/5 cm ou est plus grande.

14. Siège selon l'une ou plusieurs des revendications 1 à 13, caractérisé en ce qu'une résistance à la rupture par traction de la couche intermédiaire (13) et/ou de la feuille de blocage (21) est comprise entre 100 N/5 cm et 130 N/5 cm ou est plus grande.

15. Siège selon l'une ou plusieurs des revendications 1 à 14, caractérisé en ce que la couche intermédiaire (13) et/ou l'élément d'appui (30) et/ou la couche de recouvrement (34) est constituée d'une mousse de matière synthétique réalisée à partir d'un matériau primaire dans laquelle sont introduites par moussage des matières de charge (16, 17) en matières synthétiques de recyclage et le cas échéant de matières de remplissage, et qu'un poids de mousse libre de la couche intermédiaire (13) est compris entre 60 kg/m³ et 150 kg/m³, qui est de préférence de 100 kg/m³.

16. Siège selon l'une ou plusieurs des revendications 1 à 15, caractérisé en ce que les matières de charge (16, 17) sont constituées de matières synthétiques de recyclage qui sont formées par un granulat de mousse en une matière synthétique de mousse dure et/ou d'une dureté moyenne et/ou souple ou bien de matières synthétiques recyclées, par des déchets de matières synthétiques thermoplastiques d'une grandeur de grain de 2 mm à 20 mm, le cas échéant avec des couches de recouvrement en matières artificielles ou naturelles.

17. Siège selon l'une ou plusieurs des revendications 1 à 16, caractérisé en ce que la couche intercalaire (23) est réalisée par un filet, tressage, tissu à mailles ou grille en fibres et, respectivement fils en polyacrylonitrile préoxydé et/ou en polyaramide et/ou polyamide et/ou polyimide.

18. Siège selon l'une ou plusieurs des revendications 1 à 17, caractérisé en ce que la couche intermédiaire (13) et/ou la couche de recouvrement (34) est compactée thermiquement à un poids spécifique entre 200 kg/m³ et 400 kg/m³, de préférence à 300 kg/m³.

19. Siège selon l'une ou plusieurs des revendications 1 à 18, caractérisé en ce qu'il est ajouté à la couche intermédiaire (13) un agent pare-flammes, notamment une résine mélamine et/ou un hydroxyde d'aluminium et/ou un polyphosphate d'ammonium.

20. Siège selon l'une ou plusieurs des revendications 1 à 19, caractérisé en ce que la couche de protection résistant aux entailles (14) est un filet et, respectivement une grille avec une largeur de mailles comprise entre 2 mm et 10 mm, qui est de préférence de 5 mm.

21. Siège selon l'une ou plusieurs des revendications 1 à 20, caractérisé en ce que la couche de protection (14) est réalisée en acier à ressorts.

22. Siège selon l'une ou plusieurs des revendications 1 à 21, caractérisé en ce que la couche de protection (14), notamment la grille ou le filet ou le treillis ou le tissu à mailles est déformé spatialement plastiquement.

23. Siège selon l'une ou plusieurs des revendications 1 à 22, caractérisé en ce que la couche de protection (14) est réalisé avec un retour élastique.

24. Siège selon l'une ou plusieurs des revendications 1 à 23, caractérisé en ce qu'il est disposé au côté du corps de support (11) éloigné du dispositif de liaison (12) une couche de recouvrement (34) qui est constituée de préférence d'un tissu de revêtement (22), le cas échéant avec une doublure de renfort arrière, ou d'une mousse de matière synthétique dans laquelle sont introduites par moussage des matières de charge (16, 17) en matières synthétiques recyclées et le cas échéant avec des matières de remplissage.

25. Siège selon l'une ou plusieurs des revendications 1 à 24, caractérisé en ce que le dispositif de liaison (12) est disposé entre le tissu de revêtement (22) ou la couche intercalaire (23) éloignée de la surface de siège (28) du tissu de recouvrement (22) et la couche de recouvrement résistant aux entailles (14) introduite par moussage dans l'élément d'appui (30), et que de préférence, sur le côté de l'élément d'appui (30) éloigné de la couche de protection résistant aux entailles (14), il est disposé une couche de recouvrement (34).

26. Siège selon l'une ou plusieurs des revendications 1 à 25, caractérisé en ce qu'une couche du corps de support (11) orientée vers l'élément d'habillage (10) est constituée par la couche de protection résistant aux entailles (14), et qu'il est disposé entre celle-ci et l'élément d'appui (30) la couche intermédiaire (13) et la feuille de blocage étanche au liquide (21), à la feuille de blocage étanche au liquide (21), l'élément d'appui (30) étant fixé par une opération de formage, et le dispositif de liaison (12) est disposé entre la couche de protection résistant aux entailles (14) et le côté de la couche intercalaire (23) éloignée de la face portante du tissu de revêtement (22).

27. Siège selon l'une ou plusieurs des revendications 1 à 26, caractérisé en ce que la couche de protection (14) est reliée au côté éloigné de l'élément d'appui (30) à une feuille (41) au moins étanche au liquide.

28. Siège selon l'une ou plusieurs des revendications 1 à 27, caractérisé en ce que la feuille de blocage (21) ou la feuille (41) est réalisée sous forme de feuille autocollante en polyéthylène ou polypropylène, donc en une feuille de PE ou PP.

29. Siège selon l'une ou plusieurs des revendications 1 à 28, caractérisé en ce que la feuille (41) est pourvue d'une couche autocollante au côté orienté vers la couche de protection résistant aux entailles (14).

30. Siège selon l'une ou plusieurs des revendications 1 à 29, caractérisé en ce qu'un nombre de résistance de diffusion de vapeur de la feuille de blocage étanche au liquide (21) est inférieure à 100 000, de préférence inférieure à 60 000.

31. Siège selon l'une ou plusieurs des revendications 1 à 30, caractérisé en ce que la colle du dispositif de liaison (12) a une force d'adhésion maximale comprise entre 100 et 140 N/5 cm, et qu'elle est de préférence comprise entre 110 et 125 N/5 cm.

32. Procédé de fabrication d'un rembourrage de siège (4) pour un siège (1) notamment dans des moyens de transport publics, où un composant composite (24) constitué d'un tissu de revêtement (22) et d'une couche intercalaire (23) avec une surface éloignée de celle-ci est placée sur la face de forme d'un moule (45), est positionnée et retenue dans le moule (45), à la suite de quoi une matière synthétique liquide est introduite dans l'espace creux du moule (48) pour fabriquer le corps de support (11), et que le corps de support (11) est fabriqué, notamment selon l'une ou plusieurs des revendications 1 à 31, caractérisé en ce que la couche intercalaire (23) du composant composite (24) est reliée à une couche intermédiaire (13) en une mousse de matière synthétique remplie de matières de remplissage et/ou de matières de charge (16, 17), notamment en matières synthétiques recyclées, par une couche de colle (18, 25), dans laquelle est noyée la couche de protection résistant aux entailles (14) et qu'on colle ensuite sur la surface éloignée de la couche intercalaire (23) une feuille de blocage imperméable au liquide (21), et en ce qu'on applique, après l'insertion du composé composite (24) avec la couche de protection (14) et la feuille de blocage (21) et après la fermeture de l'espace creux du moule (48), une mousse de matière synthétique liquide (31) pour réaliser l'élément d'appui (30) sur la feuille de blocage étanche au liquide (21), et qu'après la fin de la réaction de la mousse de matière synthétique (31), le rembourrage de siège (4) est prélevé de l'espace creux du moule (48).

33. Procédé de fabrication d'un rembourrage de siège (4) pour un siège (1), notamment dans des moyens de transport publics, où un composé composite (24) constitué d'un tissu de revêtement (22) et d'une couche intercalaire (23) est placé avec une surface éloignée de celle-ci sur la face de forme d'un moule (45), est positionné et retenu dans le moule (45), à la suite de quoi une matière synthétique liquide, pour la fabrication du corps de support (11), est introduite dans l'espace creux de moule (48) et le corps de support (11) est fabriqué, notamment selon l'une ou plusieurs des revendications 1 à 32, caractérisé en ce qu'on applique sur la couche de protection résistant aux entailles (14) une feuille imperméable à l'humidité (41) et que la couche de protection résistant aux entailles (14) est déformée spatialement conjointement avec cette feuille étanche au liquide (41) et est placée dans un moule (45) et est retenue ensuite en position au moyen d'un vide, à la suite de quoi est appliqué sur la surface de la feuille étanche au liquide orientée vers la couche de protection résistant aux entailles (14), la matière brute liquide pour la mousse de matière synthétique (31) de l'élément d'appui (30) et est formée à celle-ci au cours de l'opération de moussage à la feuille étanche au liquide (41) en noyant la couche de protection résistant aux entailles (14), à la suite de quoi la feuille étanche au liquide (41), après la solidification de l'élément d'appui (30) est retirée et un composé composite (24), le cas échéant formé préalablement, est relié par une couche de colle (36, 40) à la couche intercalaire (23) ou au tissu de revêtement (22).

34. Procédé selon la revendication 32, caractérisé en ce que la couche intercalaire (23), la couche intermédiaire (13) et la couche de protection résistant aux entailles (14) sont réunies de façon plan en un composant qui ensuite est découpé grossièrement, et qu'on applique sur la couche intercalaire (23) le tissu de revêtement (22) et sur la couche intermédiaire (13) la feuille (41) et ensuite le composé composite (24) est matricé et le cas échéant découpé, ainsi que déformé spatialement, et qu'on fabrique ensuite dans le même moule (45) ou après l'insertion dans un moule (45), l'élément d'appui (30) en appliquant la matière liquide de la mousse de matière synthétique (31) dans le moule (45) et qu'on le relie en même temps par concordance des formes au composant.
